(19)

Europäisches
Patentamt
European
Patent Office
Office européen
des brevets

(11) **EP 2 230 853 A1**

(12) **EUROPEAN PATENT APPLICATION**

(43) Date of publication:
**22.09.2010 Bulletin 2010/38**

(51) Int Cl.:
**H04N 7/50** (2006.01)

(21) Application number: **09155312.3**

(22) Date of filing: **17.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**
Designated Extension States:
**AL BA RS**

(71) Applicant: **RESEARCH IN MOTION LIMITED
Waterloo, Ontario N2L 3W8 (CA)**

(72) Inventors:
• **Yang, En-Hui
  Waterloo Ontario N2L 5Z5 (CA)**

• **Wang, Longji
  Waterloo Ontario N2L 5Z5 (CA)**

(74) Representative: **Patel, Binesh
  Barker Brettell LLP
  10-12 Priests Bridge
  London
  SW15 5JE (GB)**

Remarks:
Amended claims in accordance with Rule 137(2)
EPC.

(54) **Method and system for optimized video coding**

(57)    A method and encoder for full rate-distortion op-
timization of video coding over four free parameters;
namely, coding mode, motion vector, quantizer scaling
factor, and transform domain coefficients. In all cases,
the rate-distortion cost for each combination of the pa-
rameters is determined based on soft decision quantiza-
tion; specifically, a graph-based searching algorithm that
reveals the optimal quantized transform domain coefficients for encoding a macroblock or sub-block of a mac-
roblock. The full joint optimization includes a full search
of the product space defined by the possible combinations of the free parameters without approximations. Ap-
proximations and simplifications to reduce complexity
are also disclosed.

FIG.14

**Description**

**FIELD**

The present application relates to methods and systems for optimized video coding and, in particular, to an encoder and method of encoding that includes full rate-distortion optimization within a frame.

**BACKGROUND**

All ITU-T and ISO/IEC video coding standards since H.261 have in common that they are based on the so-called block-based hybrid video coding approach. The basic source-coding algorithm is a hybrid of inter-picture prediction to utilize temporal redundancy and transform coding of the prediction error signal to reduce spatial redundancy. These video standards describe only the bit-stream syntax and the decoding process, and the exact nature ofthe encoder is generally left open to user specification. This allows different rate-distortion (R-D) optimization algorithms to be applied to generate a standardized video bit stream with a better R-D performance.

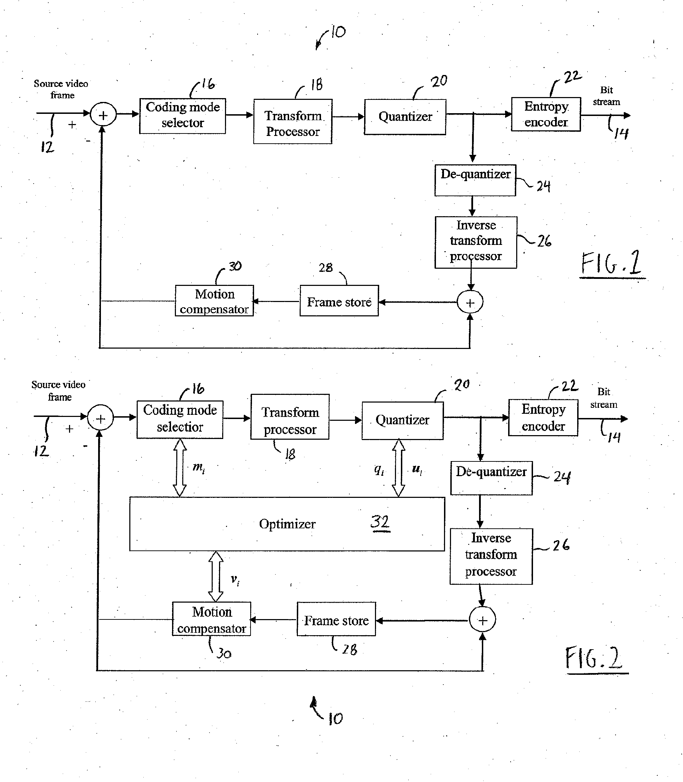

An example of a block-based hybrid video encoder 10 is shown, in block diagram form, in Figure 1. The encoder receives frames of a digitized video source 12 and outputs an encoded bitstream 14. The encoder 10 includes a coding mode selector 16, a transform processor 18, a quantizer 20 and an entropy encoder 22. The coding mode selector 16 determines whether a frame, or more particularly, individual macroblocks within the frame, will be intra-coded, inter-coded, etc. Each coding mode results in different distortion and coding bit rate. The coding mode of most reference video encoders is generally selected based on distortion criterion only.

The transform processor 18 applies a transform, typically a discrete cosine transform (DCT), to generate transform domain coefficients (e.g. DCT coefficients). The transform domain coefficients are provided to the quantizer 20, which then quantizes them to produce quantized transform domain coefficients (also called DCT indices). The quantization process is a lossy compression operation that employs a pre-defined quantization step size, which is defined by the default quantization weight matrix together with the scaling factor. The resulting quantized transform domain coefficients are then entropy encoded by the entropy encoder 22 to produce the encoded bitstream 14. Most video coding standards proposed so far provide separate default quantization weight matrices for intra-coding and inter-coding and a buffer-constrained-based rate control, which is independent of the motion estimation, is used to select the quantization scaling factor for each macroblock. The default weight matrices are video independent and the scaling factor is normally determined without being optimized in the R-D sense. In some instances, a so-called $\rho$-domain rate control scheme is used to optimizing the selection of a quantization scaling factor since it determines the scaling factor for each macroblock with a better rate-distortion performance.

The encoder 10 also includes a feedback loop for realizing the motion compensation aspect of block-based hybrid video encoders. In particular, the encoder 10 includes a de-quantizer 24 and inverse transform processor 26 for reconstructing the compressed frame (or macroblocks), to be saved as a reference for motion compensation. As noted, the encoder 10 includes a frame store 28 and motion compensator 30. The motion compensation process may result in generation of a motion vector and residual frame/macroblock, which are then transformed and encoded instead of the input frame/macroblock itself. In most encoders, motion vectors are usually chosen to minimize the prediction error in mean-square error (MSE) or in mean-absolute error (MAE) without taking into account the quantization of the prediction residuals and the resulting bit rate.

It would be advantageous to provide an improved method and encoder for improving rate-distortion performance.

**BRIEF SUMMARY**

The present application provides a method and encoder for performing full rate-distortion optimization of video coding over four free parameters; namely, coding mode, motion vector, quantizer scaling factor, and transform domain coefficients. The optimization is performed, in embodiments described below, within a given frame and using a default quantization weight matrix. In some cases, fewer than four free parameters may be factored into the joint optimization. In all cases, the R-D cost for each potential combination of the parameters is determined using a graph-based searching algorithm that reveals the optimal quantized transform domain coefficients for encoding a macroblock or sub-block of a macroblock. This may be referred to as "soft decision quantization".

The full joint optimization does not rely on approximations for the rate or distortion calculation. Rather it includes a full search of the product space defined by the possible combinations of the free parameters. In the case of four free parameters, the full product space includes all possible combinations of the four free parameters. A trellis-based approach is used to find an optimal set of parameters by identifying a minimum cost path through the trellis. Some approximations and simplifications to reduce complexity are also disclosed.

In one aspect, the present application describes a method method for optimal video coding for encoding a slice of a video source, wherein the slice includes a series of macroblocks and each macroblock comprises a plurality of sub-blocks. The method includes calculating, for each macroblock within the slice, a minimum actual rate-distortion cost for each combination of coding mode, quantizer scaling factor, and motion vector, wherein calculating the minimum actual rate-distortion cost comprises finding the optimal quantized transform domain coefficients for each sub-block within the macroblock; determining, for each macroblock and for each of the combinations of coding mode, quantizer scaling factor and motion vector, a minimum cumulative rate-distortion cost from an initial stage; tracing back through the minimum cumulative rate-distortion costs for each of the macroblocks in the series of macroblocks in the slice to identify the coding mode, quantizer scaling factor and motion vector for each macroblock that result in a minimum total rate-distortion cost for the slice, and recording the parameters for each macroblock including, for each macroblock, the identified coding mode, the identified motion vector, and the identified quantizer scaling factor; finding the optimal quantized transform domain coefficients for each macroblock based on the minimum rate-distortion cost for the slice; and encoding the slice using the identified coding modes, identified motion vectors, identified quantizer scaling factors and optimal quantized transform domain coefficients.

In another aspect, the present application describes an encoder for encoding a slice of a video source, wherein the slice includes a series of macroblocks and each macroblock comprises one or more sub-blocks. The encoder includes an input port for receiving the video source; an output port for outputting the encoded bitstream; a coding mode selector for determining the coding mode applied to each macroblock; a transform processor for performing a transform operation on each macroblock to create transform domain coefficients; a quantizer for quantizing the transform domain coefficients to generate quantized transform domain coefficients based on a quantizer scaling factor; a motion compensation feedback loop for selecting a motion vector and generating a residual macroblock based on a reference frame; an entropy encoder for generating the encoded bitstream from the quantized transform domain coefficients; memory for storing data; and an optimizer.

The optimizer is configured to calculate, for each macroblock within the slice, a minimum actual rate-distortion cost for each combination of coding mode, quantizer scaling factor, and motion vector, wherein calculating the minimum actual rate-distortion cost comprises finding the optimal quantized transform domain coefficients for each sub-block within the macroblock. The optimizer is configured to determine, for each macroblock and for each ofthe combinations of coding mode, quantizer scaling factor and motion vector, a minimum cumulative rate-distortion cost from an initial stage. The optimizer is configured to trace back through the minimum cumulative rate-distortion costs for each of the macroblocks in the series of macroblocks in the slice to identify the coding mode, quantizer scaling factor and motion vector for each macroblock that result in a minimum total rate-distortion cost for the slice, and to record in the memory the parameters for each macroblock including, for each macroblock, the identified coding mode, the identified motion vector, and the identified quantizer scaling factor. The optimizer is configured to find the optimal quantized transform domain coefficients for each macroblock based on the minimum rate-distortion cost for the slice. The coding mode selector, quantizer, motion compensation feedback loop, and entropy encoder are configured to use the identified coding mode, identified motion vector, identified quantizer scaling factor and optimal quantized transform domain coefficients for encoding the slice.

In yet another aspect, the present application discloses a computer program product comprising a computer-readable medium containing computer-executable instructions for encoding a frame of a video source in accordance with the method described.

In one aspect, this application discloses and describes a joint optimization framework to achieve the compression performance limit for video encoding without considering frame dependence and the quantization weight matrix optimization. Having searched the full product space of all free coding parameters within a given frame, the proposed full optimization process provides an upper-bound benchmark with which to assess the performance of cheaper heuristics and other ad hoc methods. The joint optimization process yields optimal parameters for configuring an encoder to realize the compression performance limit in encoding a digital video source.

Both ITU-T H series and ISO/IEC MPEG series video coding standards define conceptually similar coding algorithms. The features and enhancements contained in these standards make them differ. Both the full joint optimization framework and the later-described approximations and variations can be applied to the optimization of H.263, H.264 and MPEG-4 coding standards, or other similar coding standards. It will be appreciated that the particular graph-based searching algorithm described herein for identifying the optimal transform domain coefficients for minimizing rate-distortion cost is particularly applicable to 8x8 sub-blocks in an MPEG video coding standard. Other standards may employ modified searching algorithms for identifying optimal transform domain coefficients. It will be appreciated that the present application is not limited to particular hybrid coding standards.

## BRIEF DESCRIPTION OF THE DRAWINGS

Reference will now be made, by way of example, to the accompanying drawings which show example embodiments of the present application, and in which:

Figure 1 shows an example of a block-based hybrid video encoder in block diagram form;

Figure 2 shows, in block diagram form, an embodiment of an encoder in accordance with the present application;

Figure 3 graphically illustrates a portion of a trellis for the full R-D optimization;

Figure 4 graphically illustrates a portion of an trellis for one approximation of the full R-D optimization;

Figure 5 shows, in flowchart form, an example method for optimizing video coding in accordance with the present application;

Figure 6 shows a more detailed example method for optimizing video coding;

Figure 7 shows, in flowchart form, a method for calculating minimum actual R-D cost of encoding $MB_i$ in intra-mode;

Figure 8 shows, in flowchart form, a method for calculating minimum actual R-D cost of encoding $MB_i$ in inter-mode using forward or backward motion compensation;

Figure 9 shows, in flowchart form, a method for calculating minimum actual R-D cost of encoding $MB_i$ in inter-mode using bi-directional motion compensation;

Figure 10 shows, in flowchart form, one embodiment of a method of determining the minimum cost of encoding an 8x8 sub-block of a macroblock $MB_i$;

Figure 11 graphically illustrates an optimal path searching algorithm for finding the optimal quantized coefficients in the R-D sense for an 8x8 sub-block of a macroblock $MB_i$;

Figures 12 (a) to (d) and 13 (a) to (d), respectively, plot the PSNR values of the luminance component versus the bit rate for the first 100 frames of video sequences *Foreman* and *Coastguard*;

Figure 14 shows, in flowchart form, an example method for optimizing video coding in accordance with the present application; and

Figure 15 shows, in flowchart form, an example process for determining the minimum cost of encoding a macroblock in inter-mode for the method of Figure 14.

Similar reference numerals may have been used in different figures to denote similar components.

## DESCRIPTION OF EXAMPLE EMBODIMENTS

## <u>FULL JOINT OPTIMIZATION</u>

Rate-distortion analysis can be used to try to optimize a parameter within the encoder 10 to optimize the efficiency of the encoding process. However, a number of the operations within the encoder's 10 hybrid structure are interdependent and optimizing a single parameter, or a number of parameters on an individual basis, may not result in an optimal encoder. Nevertheless, attempts have been made to optimize various parameters of the encoder.

The choice of one of these operational parameters will influence the others in the final coding performance, and thus it is desirable in the R-D sense to jointly optimize the operational parameters instead of optimizing them individually.

Partially because of the lack of suitable structures, and partially because of the complexity concerns, many of the joint parameter optimization algorithms for video coding in the literature use a hard-decision quantizer for the transform domain coefficients. Recently, there has been some work on joint parameter optimization algorithms for video coding specifically for the MPEG-4 Part 10 and ITU-T H.264 standards. For example, US Patent publication 2007/0217506 entitled "Soft Decision And Iterative Video Coding for MPEG and H.264", filed by Yang et al., describes an iterative method of joint optimization that employs soft decision quantization.

In other words, most known joint optimization algorithms do not include the transform domain coefficients in the joint optimization framework. This implies that room still exists for further optimization in the R-D sense. The present application describes embodiments of a full joint optimization algorithm for video coding that is intended to jointly optimize all the mutual dependent free parameters without neglecting any interactions among the free parameters. The inter-coding mode introduces a temporal dependency among frames because reference is made to prior decoded pictures or blocks via motion compensated prediction. Hence, the real full joint optimization algorithm in a strict sense would require the minimization of a Lagrangian cost function for all frames in the entire video sequence or in a group of pictures (GOP) if an intra-coded frame is inserted and bit allocation among GOP is not considered. Such a minimization would need to be performed over the product space of the coding parameters through all the blocks in the video sequence or GOP. Practically, this product space is too large to be evaluated and is too computationally intensive to be implemented using current computing technology. Accordingly, the present application describes embodiments that are directed to a "full" joint optimization for a given frame, *i.e.*, fully optimizing one video frame with the assumption that the coding decisions for the previous frames have already been made. Embodiments of the present application also employ the default quantization weight matrix, although it is recognized that the quantization weight matrix could be optimized based on the statistics of a given frame through multiple passes. In other words, embodiments described herein are structured to achieve the performance limit for single frame optimization given a fixed quantization weight matrix. It will be appreciated that other embodiments could be extended to cover the full product space so as to perform joint optimization over the entire video sequence of frames. It will also be appreciated that other embodiments could include optimization of the quantization weight matrix.

Reference is first made to Figure 2, which shows, in block diagram form, an embodiment of an encoder 10 in accordance with the present application. The encoder 10 implements a typical hybrid codec, such as for realizing MPEG-2 encoding of a video source. The encoder 10 receives frames of a video source 12 and outputs a bitstream 14. In this embodiment, the encoder 10 includes an optimizer 32 for jointly optimizing various parameters. For example, in one embodiment the optimizer 32 jointly optimizes the selection of coding mode $m_i$, quantization scaling factor $q_i$, motion vector $v_i$, and the quantized transform domain coefficients $u_i$. The quantized transform coefficients are jointly optimized with other parameters on the basis of soft decision quantization.

Advantageously, some embodiments of the present application perform joint optimization on the basis of actual rate-distortion calculations, rather than approximations or predictions. Moreover, by performing the joint optimization analysis over the full range of possible combinations of the various parameters, at least within the confines of a single frame, the full range of possible R-D costs is taken into account in selecting the optimal set of parameters for encoding the macroblocks (MB) within that frame. As will be described in greater detail below, in some embodiments, the quantization scaling factor $q_i$ may be pre-selected based on $\rho$-domain analysis and the remaining parameters may be jointly optimized. In some other embodiments, the motion vector $v_i$ may be selected without including the actual bit rate of encoding a macroblock in the cost function and the remaining parameters may be jointly optimized. Other variations will be understood by those skilled in the art having regard to the detailed description that follows.

In the description that follows, the full joint optimization problem is described, where the minimization is performed over all the four free parameters; namely the coding mode, motion vector, quantization scaling factor and transform domain coefficient. In the proposed full R-D optimization scheme, we shall search the full product space of all free coding parameters within a given frame and use the actual distortion and bit rate in the joint optimization without any estimation or approximation.

Given a video frame with $N$ MBs, let $d_i = d(X_i, \hat{X}_i)$ denote the actual reproduction error resulting from the $i^{th}$ MB, $X_i$, where $\hat{X}_i$ is the reconstruction of $X_i$. The actual rate for coding MB $X_i$ consists of four parts; namely the coding mode $m_i$, the motion vector $v_i$, the quantization scaling factor $q_i$, and the transform domain coefficient indices $u_i$, which are sometimes also referred to as the quantized transform domain coefficients. For a given entropy coding method with its rate function $r(\cdot)$, which is defined as the number of bits for coding an input, the resulting bit rate for encoding MB $X_i$ is $r(m_i) + r(v_i) + r(q_i) + r(u_i)$. Then, the actual R-D cost for encoding the given frame is

$$J(\lambda) = \sum_{i=1}^{N} d_i + \lambda \cdot \sum_{i=1}^{N} (r(m_i) + r(v_i) + r(q_i) + r(u_i)) \qquad (1)$$

where the Lagrangian multiplier $\lambda$ determines the relative importance of the rate and the distortion. It will be understood that the entropy coding method may be different for each of the four parts. Also, aspects of the rate that are not related to the MB, e.g., the sequence/picture/slice headers, are not included in the expression.

Let $M_N = \{m_1, m_2, \cdots, m_N\}$ and $V_N = \{v_1, v_2, \cdots, v_N\}$ be the set of the coding modes and the set of the motion vectors of all MBs for the given frame, respectively. Similarly, let $Q_N = \{q_1, q_2, \cdots, q_N\}$ and $U_N = \{u_1, u_2, \cdots, u_N\}$ be the set of quantization scaling factors and quantized transform domain coefficients of all MBs for the given frame, respectively. Then, the full R-D optimization problem for a given frame can be formulated as:

$$(M_N^*, V_N^*, Q_N^*, U_N^*) = \min_{M_N} \min_{V_N} \min_{Q_N} \min_{U_N} \{J(\lambda) = \sum_{i=1}^{N} d_i + \lambda \cdot \sum_{i=1}^{N} (r(m_i) + r(v_i) + r(q_i) + r(u_i))\}$$

$$(2)$$

Although in one embodiment, the optimization is performed over the luminance component, it can easily be expanded to include all visual components if desired. Because the motion vectors are 1-D differentially coded in most video coding systems including MPEG-2 and since $r(m_i)$ and $r(q_i)$ in MPEG-2 are also dependent on the previous coded MB ($r(m_i)$ is dependent on the previous coded MB through $q_i$), the optimization problem in (2) cannot be evaluated for each MB independently. However, based on the syntax of MPEG-2, the motion vector is reset at the start of a slice and the quantization step size of the first MB in a slice is also explicitly output in the stream. Therefore, the optimization problem in (2) can be evaluated slice-by-slice within a frame in raster-scan order. Accordingly, in this embodiment, the problem is formulated as finding the minimum cost of (2), hence, the optimal coding mode, motion vector, quantization scaling factor, and quantized transform domain coefficients for a slice consisting of $K$ MBs where $K$ is the number of MBs in a slice.

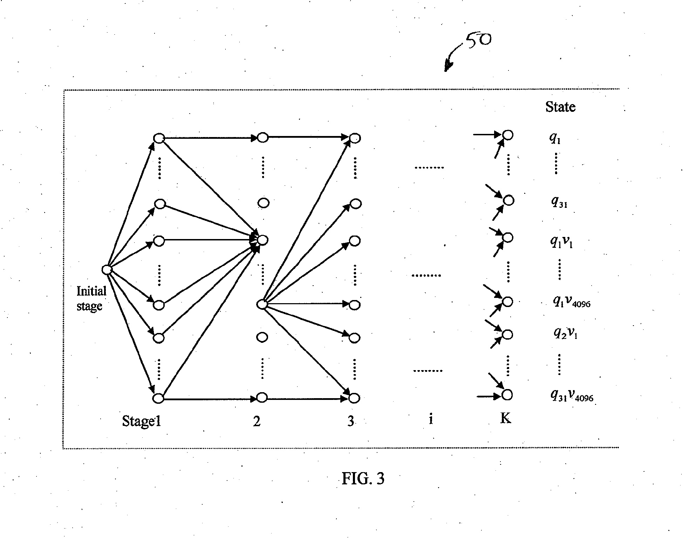

Reference is now made to Figure 3, which shows a trellis structure 50 for searching the full product space over all four free parameters for MPEG-2. The trellis 50 reflects the interdependency between MBs. For a 16x16 searching window with half-pixel resolution, each MB has 64x64=4096 candidates for motion vector in one prediction direction. Each MB also has 31 candidates for quantization scaling factor. MB coding mode for each MB can be intra or inter-coded with or without quantization scaling factor change. Note that there is no intra-block prediction in MEPG-2. Therefore, we need to create a trellis consisting of K stages and 127007 (4096x31+31=127007) states in each stage to catch all the interdependency among a slice as shown in Figure 1. The states from $q_1$ to $q_{31}$ accounts intra coding mode and the states from $q_1v_1$ to $q_{31}v_{4096}$ account for inter coding mode.

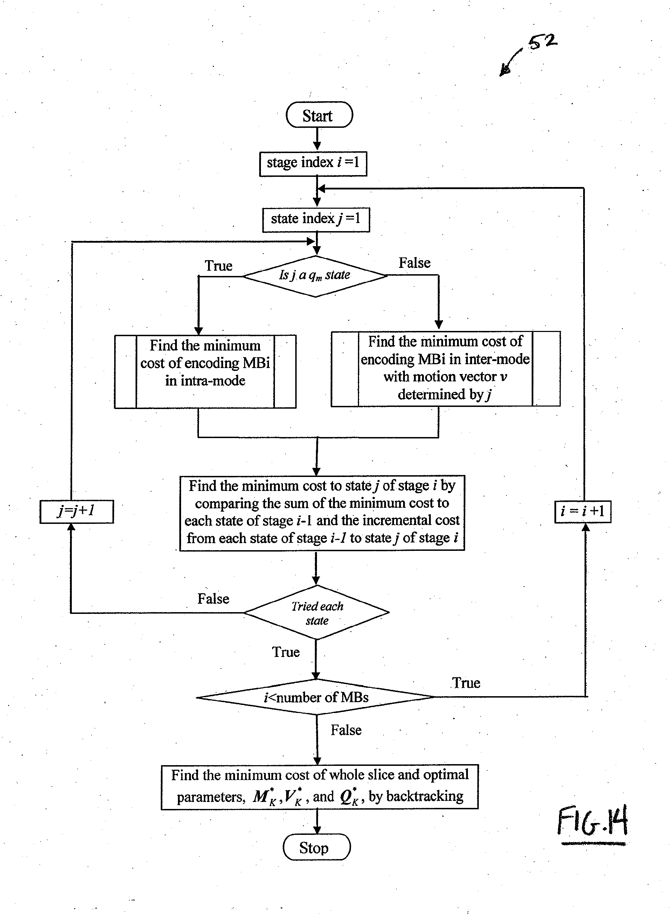

Now reference is also made to Figure 14, which shows, in flowchart form, an example method 52 for optimizing video coding in accordance with the present application. In this example method 52, the optimization is performed over one slice of an MPEG-2 P frame using the trellis 50 depicted in Figure 3. The process of obtaining the optimal coding mode, motion vector, quantization scaling factor and transform domain coefficients, as illustrated in Figure 14, is outlined as follows.

1. Set stage index (*i.e.,* MB index) $i = 1$.

2. For each stage index $i$, repeat Step A.

A. For each state index $j$, repeat Step a) to Step c)

(a) If state $j$ corresponds to a $q_m$ state, find the minimum actual rate-distortion cost of encoding the coefficients of the $i^{th}$ MB by intra-coding mode with a quantization scaling factor $q_m$.

(b) If state $j$ corresponds to a $q_mv_n$ state, find the minimum actual rate-distortion cost of encoding the coefficients of the $i^{th}$ MB by inter-coding mode with a quantization scaling factor $q_m$ and a forward motion vector $v_n$.

(c) Find and record the minimum rate-distortion cost to state $j$ of stage $i$ from the initial stage by comparing the sums of the minimum cost to each state $j'$ of stage $i-l$ and the incremental cost from state $j'$ of stage $i-l$ to state $j$ of stage $i$. The incremental cost from state $j'$ of stage $i-l$ to state $j$ of stage $i$ includes the cost of encoding the coefficients of the $i^{th}$ MB obtained in Step a) or Step b) and the cost of encoding $r(m_i)$, $r(v_i)_1$, $r(q_i)$, which can be completely determined given state $j'$ of stage $i-l$ and state $j$ of stage $i$.

3. Set $i=i+l$. If $i \leq K$ , go to Step 2 for next stage; else, continue to Step 4.

4. Find the minimum rate distortion cost of encoding the whole slice at stage K, then trace back to obtain the optimal coding modes $M_K^*$, optimal motion vectors $V_K^*$, and optimal quantizer scaling factors $Q_K^*$ for current slice.

The optimal quantized transform domain coefficients $U_K^*$ can also be recorded during the optimal path building process if memory is not an issue. Alternatively, these optimal quantized transform domain coefficients can be regenerated again after $M_K^*$, $V_K^*$, and $Q_K^*$ are obtained.

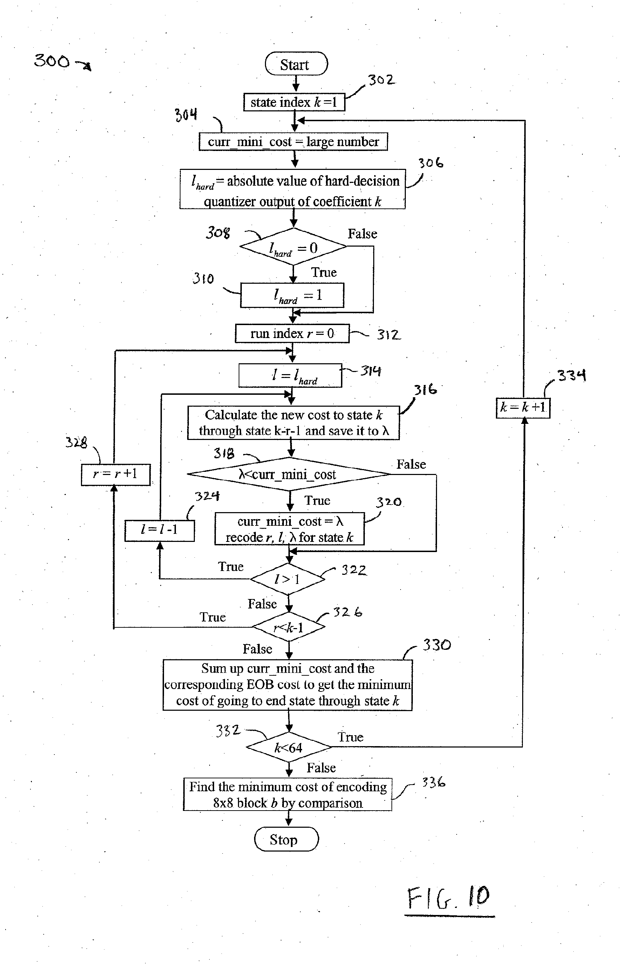

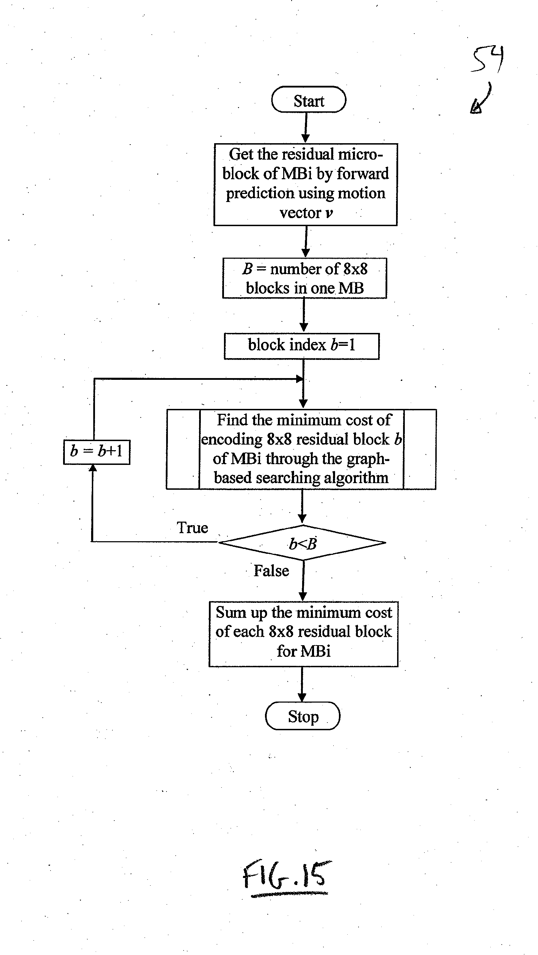

Details of Step 2(A)(b) are futher illustrated by the flowchart 54 shown in Figure 15, which details the block-by-block determination of minimum cost of encoding each 8x8 block using a graph-based searching algorithm. The use of a graph-based searching algorithm to determine minimal encoding cost for subblocks within a MB is described in greater detail below in conjunction with Figure 10.

Further details of the steps of the full R-D optimization are detailed below in connection with simplified embodiments.

The full R-D optimization demands extensive CPU power and memory for implementation. Accordingly, in some embodiments, certain approximations may be made to reduce the computational complexity and memory consumption while maintaining the compression performance close to that achieved by the full R-D optimization.

## APPROXIMATIONS OF THE FULL JOINT OPTIMIZATION

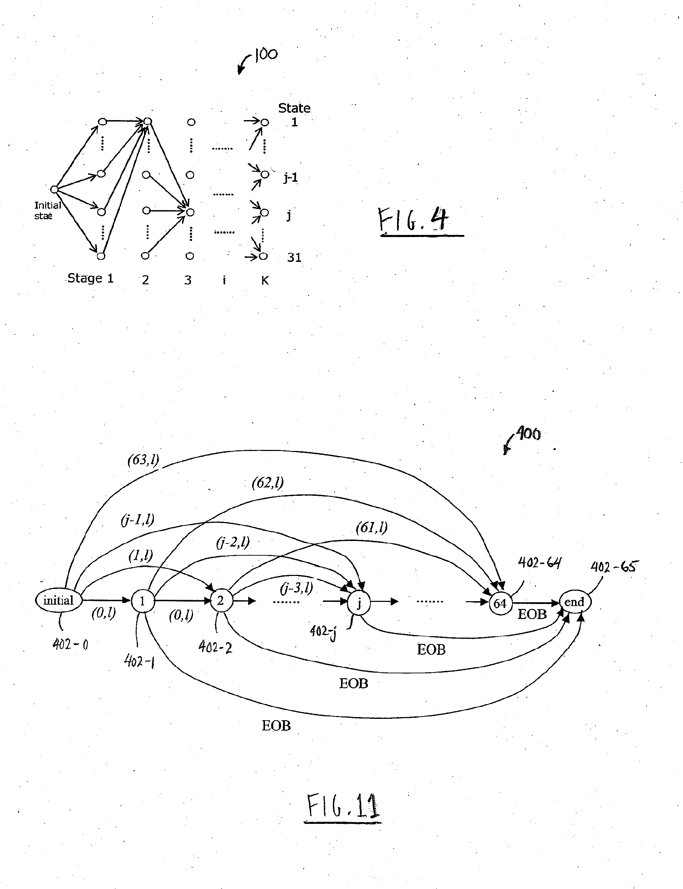

A first approximation comes from decoupling the dependence of the differentially coded motion vector such that the number of states in the trellis is reduced to 31, which correspond to the 31 possible quantization scaling factors in MPEG-2. Figure 4 graphically illustrates a portion of the simplified trellis 100. This approximation of the full R-D optimization process is described in a high level as follows.

One reason for using a trellis is to track the interdependency between the MBs due to differentially coded motion vectors. The number of motion vector candidates is much greater than the number of quantizer scaling factor candidates for a single MB (4096 vs. 31 in MPEG-2). In high bit-rate video encoding, the number of bits consumed by encoding motion vectors is significantly small than the number of bits consumed by encoding the residues. Therefore, decoupling the dependence of the differentially coded motion vectors will dramatically reduce the number of states in the trellis while keeping the R-D performance close to optimal. Based on this observation, the first approximation decouples the dependence of the differentially coded motion vectors but continues to compare the full combination of motion vectors and scaling factors like in the full R-D optimization process. The computational complexity of this approximation is still very high but the memory requirement is reduced dramatically.

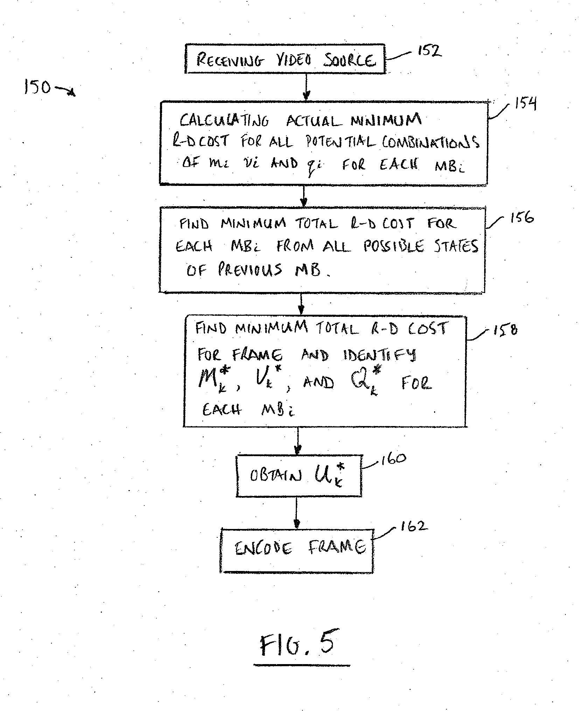

Reference is now made to Figure 5, which shows, in flowchart form, an example method 150 for optimizing video coding in accordance with the present application. The method 150 begins in step 152 with receipt of the digital video source. In step 154, the actual minimum rate-distortion cost is calculated for each macroblock within a frame for all possible combinations of coding mode $m_i$, quantization scaling factor $q_i$ and motion vector $\boldsymbol{v}_i$. The calculation of the actual minimum rate-distortion cost includes performing soft decision quantization to realize a set of optimal quantized transform domain coefficients $\boldsymbol{u}_i^*$. As will be described in greater detail in example embodiments below, in some instances the performance of soft decision quantization to develop optimal quantized transform domain coefficients $\boldsymbol{u}_i^*$ may be performed on a sub-block basis, wherein each macroblock is made of sub-blocks. The development of optimal quantized transform domain coefficients $\boldsymbol{u}_i^*$ may include utilization of a graph-based optimal path searching algorithm. A similar graph-based optimal path searching algorithm for JPEG was described in patent application serial no. 11/180,513, filed July 15, 2005, the contents of which are hereby incorporated by reference.

In step 156, for each possible combination of the parameters for a macroblock, the minimum total rate-distortion cost is found for that macroblock from all possible combinations of the parameters from the previous macroblock. This calculation takes into account the incremental costs from the previous macroblock to the current macroblock, based on the costs calculated in step 154 and factoring in the rate impact of differentially coded parameters. For example, step 156 may take into account $r(m_i)$, $r(v_i)$, $r(q_i)$.

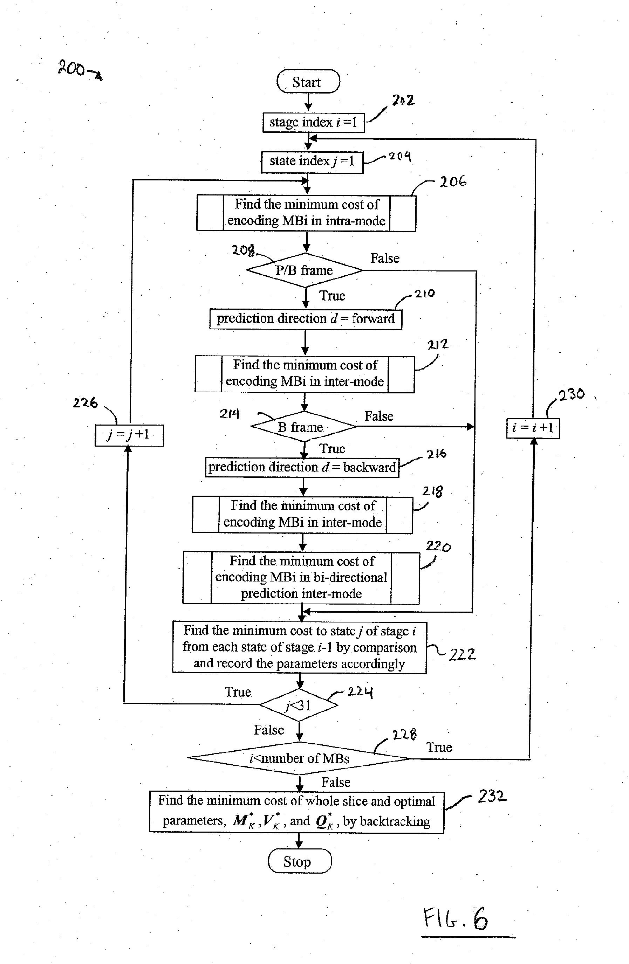

It will be appreciated that steps 154 and 156 are not performed discretely and sequentially. In many embodiments, they are performed interlacedly, as combinations of the various parameters are tried, modified, and re-tried, to build a network of costs. A more detailed example embodiment is described below in conjunction with Figure 6.

In steps 154 and 156, the minimum rate-distortion costs calculated for each possible combination and each transition from a previous macroblock to a current macroblock are recorded in memory.

Steps 154 and 156 result in building a network (in some cases a trellis) of calculated costs that reflects the R-D cost associated with each possible combination of the parameters for each of the macroblocks of a frame, and takes into account macroblock-to-macroblock transitional costs. The transitional costs between two macroblocks are determined for all possible combinations of parameters for each of the macroblocks, resulting in a network of possible paths to transition sequentially through each macroblock from a beginning or initial macroblock to an ending or final macroblock. The network of possible paths includes the costs associated with each path. The costs stored at each node reflect the minimum cumulative R-D costs to reach that state of that stage from the initial stage.

In step 158, having determined the actual R-D cost for all possible states and transitions for all potential parameters across all the macroblocks, the minimum total R-D cost for encoding the whole frame is determined. In other words, a "least R-D cost path" is found through the network of costs built in steps 154 and 156. The path of minimum total R-D cost then determines, for each macroblock the optimal parameters. The path may be traced back to identify the optimal coding modes $M_K^*$, optimal motion vectors $V_K^*$, and optimal quantizer scaling factors $\boldsymbol{Q}_K^*$ for the current frame. The optimal quantized transform domain coefficients $U_K^*$ are also obtained as indicated in step 160. If the optimal quantized transform domain coefficients $U_K^*$ for each macroblock (or subblocks within each macroblock) were recorded during step 154, then they are retrieved from memory based on the optimal path. Otherwise, they are recalculated using the optimal parameters identified in step 158.

By "tracing back", it will be understood that the nodes of the last stage (macroblock) contain the cumulative R-D costs associated with their respective minimum cost paths through the trellis. The lowest cost is easily identified in the last stage. From that identified state of the last stage, it is known that the minimum cost was realized by way of a particular state of the previous stage (macroblock). Accordingly, the minimum cost path may be traced back to the correct state of the previous stage. At that node, it will then be known that its minimum cost was realized by way of a particular state of the previous stage. By tracing back through the trellis in this manner, the minimum cost path is realized, along with the corresponding state for each macroblock.

The optimal encoding parameters, including the coding modes $\boldsymbol{M}_K^*$, motion vectors $\boldsymbol{V}_K^*$, quantizer scaling factors $\boldsymbol{Q}_K^*$, and quantized transform domain coefficients $U_K^*$, are then used in step 162 to configure the various components/blocks of the encoder to encode the video source.

A more detailed example embodiment is now described based on the example method 200 shown in flowchart form in Figure 6. In this example method 200, a stage index $i$ represents which macroblock is being evaluated. If there are $K$ macroblocks, then the stage index $i$ ranges from 1 to $K$. It may also be referred to as a MB index. In the first step 202 of the method 200, the stage index $i$ is initialized to 1. Then, in step 204, a state index $j$ is set to 1. The state index $j$ is an index of the quantization scale factor. In some embodiments, there are 31 possible quantization scale factors, meaning that the state index $j$ ranges from 1 to 31. In some other coding schemes there may be a different number of possible quantization scale factors.

As will be explained further below, the process of determining the minimum R-D cost for encoding a given MB using a given quantization scale factor, varies depending on the coding mode. However, not all coding modes are available in all frames. In an I-frame, only the intra-mode is possible. In a P-frame, either intra-mode or inter-mode with forward motion compensation are both possible. In a B-frame, macroblocks can be encoded using intra-mode, inter-mode with forward motion compensation, inter-mode with backward motion compensation, and inter-mode with bi-directional motion compensation. Accordingly, the frame-type determines how many potential coding modes are possible for a macroblock.

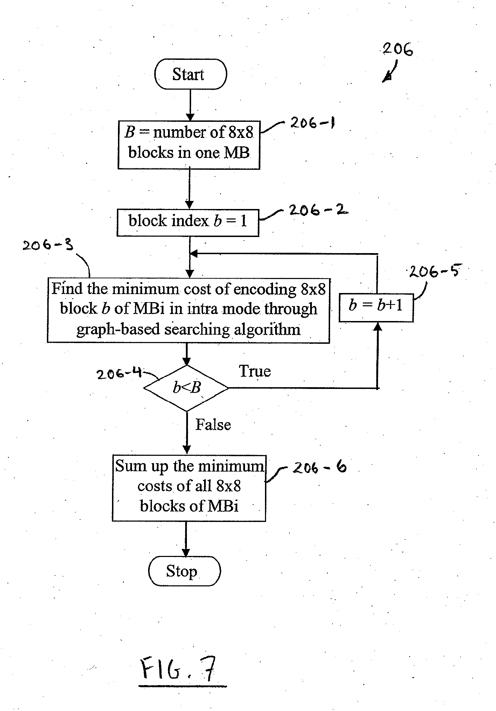

With all frame-types, intra-mode is possible. Accordingly, in step 206, for quantization scaling factor $q_j$, the minimum actual R-D cost of encoding $MB_i$ in intra-mode is calculated. The calculation of minimum actual R-D cost is determined without including differential factors dependent upon the previous $MB_{i-1}$, such as $r(m_i)$, in the rate part. Calculation of the minimum actual R-D cost for encoding a macroblock includes determining the optimal transform domain coefficients $\boldsymbol{u}_i^*$. Further detail regarding the calculation of minimum R-D cost for encoding a macroblock in intra-mode is described below in conjunction with Figure 7.

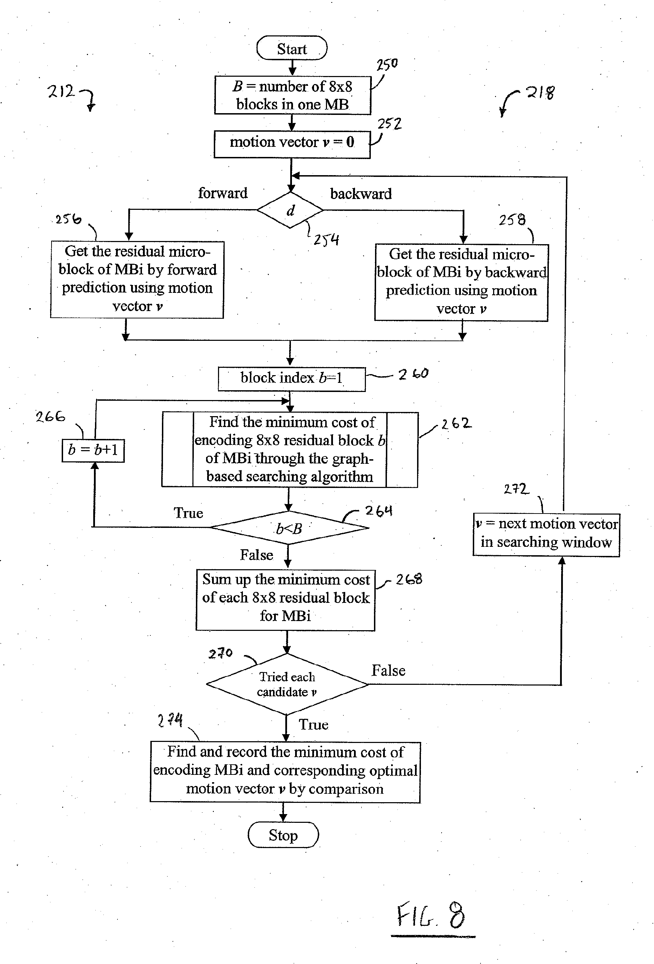

An evaluation is made in step 208 as to whether the current macroblock, $MB_i$, comes from a P- or B-frame. If not, *i.e.* if it is from an 1-frame, then the method 200 skips down to step 222. If it is a P- or B-frame, then in step 210 the prediction direction is set to "forward" and, in step 212, the minimum actual R-D cost of encoding $MB_i$ in inter-mode is calculated. With the prediction direction set to "forward", the actual R-D cost calculated is based on inter-mode with the potential for forward motion compensation. The calculation of minimum actual R-D cost is determined without including differential factors dependent upon the previous $MB_{i-1}$, such as $r(m_i)$, $r(v_i)$, and $r(q_i)$ in the rate part. Calculation of the minimum actual R-D cost for encoding a macroblock includes determining the optimal transform domain coefficients $\boldsymbol{u}_i^*$. Further detail regarding the calculation of minimum R-D cost for encoding a macroblock in inter-mode with forward motion compensation is described below in conjunction with Figure 8.

In step 214, a determination is made as to whether the frame is a B-frame and, if not, then the method 200 skips to step 222. If the frame is a B-frame then two additional potential coding modes are evaluated. In particular, in steps 216 and 218, inter-mode with backward motion compensation, and in step 220 inter-mode with bi-directional motion compensation. In step 216, the prediction direction is set to "backward" and in step 218 the minimum actual R-D cost of encoding $MB_i$ in inter-mode with backward motion compensation is calculated. The calculation of minimum actual R-D cost is determined without including differential factors dependent upon the previous $MB_{i-1}$, such as $r(m_i)$, $r(v_i)$, and $r(q_i)$ in the rate part. Calculation of the minimum actual R-D cost for encoding a macroblock includes determining the optimal transform domain coefficients $\boldsymbol{u}_i^*$. Figure 8 illustrates further details regarding the calculation of minimum R-D cost in step 218, as described further below.

In step 220, the minimum actual R-D cost of encoding $MB_i$ in inter-mode with bi-directional motion compensation is calculated. The optimal forward motion vector determined in step 212 and the optimal backward motion vector determined in step 218 are used in step 220. The calculation of minimum actual R-D cost is determined without including differential factors dependent upon the previous $MB_{i-1}$, such as $r(m_i)$, $r(v_i)$, and $r(q_i)$ in the rate part. Calculation of the minimum actual R-D cost for encoding a macroblock includes determining the optimal transform domain coefficients $\boldsymbol{u}_i^*$. Further detail regarding the calculation of minimum R-D cost for inter-mode coding with bi-directional motion compensation is provided below in conjunction with Figure 8.

At step 222, having excluded the impact on rate of encoding differential parameters when performing the actual R-D cost calculations above, the differential impact is now evaluated. In particular, the minimum total rate distortion cost to state $j$ of stage $i$ from the initial stage is found by comparing the sums of the minimum cost to each state in stage $i$-$l$ and the incremental cost from stage $i$-$l$ to stage $i$, which includes the cost from current $MB_i$ calculated in steps 206 to 220 and $r(m_i)$, $r(v_i)$, $r(q_i)$. The resulting optimal parameters, $m_i$, $v_i$, $q_i$ are recorded for state $j$ of stage $i$.

At step 224, an evaluation is made as to whether the state index $j$ has reached its maximum, *e.g.* 31, which would indicate that the R-D costs have been calculated for all possible quantizer scaling factors $q_j$. If not, then the state index $j$ is incremented in step 226 and the method 220 returns to repeat steps 206 to 222 for the incremented state index. If the state index $j$ has reached its maximum then in step 228 an evaluation is made as to whether the stage index $i$ has reached its maximum, *e.g.* $K$, which would indicate that the R-D costs have been calculated for all macroblocks in the frame. If not, then the stage index $i$ is incremented in step 230 and the method 200 returns to repeat steps 204 through 222 for the next macroblock.

Once the actual R-D costs have been calculated for all macroblocks, then the method 200 proceeds to step 232 where the minimum total R-D cost of encoding all the $K$ macroblocks is determined and the optimal parameters,

$$\boldsymbol{M}_K^*, \; \boldsymbol{V}_K^* \; \text{and} \; \boldsymbol{Q}_K^*,$$

are identified for each macroblock. As noted previously, the optimal quantized transform coefficients may be retrieved if recorded during steps 202 to 228 (subject to memory space limitations), or they may be recalculated.

It will be appreciated that the minimum R-D cost of encoding a particular macroblock is calculated at various points in the method 200 for various sets of possible combinations of parameters. For example, a calculation of minimum R-D cost occurs in step 206 for the intra-coding case; a calculation of minimum R-D cost occurs in step 212 for the inter-coding case with forward motion compensation; a calculation of minimum R-D cost occurs in step 218 for the inter-coding case with backward motion compensation; and a calculation of minimum R-D cost occurs in step 220 for the bi-directional coding case. Further example details of the calculation of minimum R-D costs in these various scenarios will now be described in conjunction with Figures 7 through 9.

Figure 7 shows, in flowchart form, an embodiment of the step 206 for calculating minimum actual R-D cost of encoding $MB_i$ in intra-mode. In this example, the macroblock $MB_i$ is made up of $B$ number of 8x8 blocks, which may be referred to as "sub-blocks". For example, the macroblock may be a 16 by 16 block, meaning that it contains 4 8x8 luminance blocks. The calculation of encoding cost is done on a sub-block level, meaning that it needs to be repeated for each sub-block within a macroblock. The initial number of sub-blocks $B$ and the block index $b$ are initialized in steps 206-1 and 206-2, respectively.

In step 206-3, the minimum cost of encoding 8x8 block $b$ is determined. Additional details regarding the calculation of minimum cost of encoding a sub-block will be provided below. In steps 206-4 and 206-5, if the block index $b$ has not reach the total number of blocks $B$, then it is incremented and the cost of encoding the next block is determined in step 206-3. Otherwise, in step 206-6, the total of the minimum costs for all sub-blocks are added to determine the overall minimum cost of encoding macroblock $MB_i$.

Reference is now made to Figure 8, which shows an example method of implementing steps 212 and 218 from the method 200 of Figure 6. These steps 212 and 218 involve the calculation of minimum R-D cost for encoding a macroblock $MB_i$ based on inter-mode coding using forward motion compensation or backward motion compensation, respectively. In this example method, this distinction is handled using the "prediction direction" setting referenced in steps 210 and 216 of the method 200 of Figure 6.

As described above, the macroblock $MB_i$ is made up of $B$ sub-blocks, the value of which is initialized at step 250. For each macroblock, there are a set of candidate motion vectors, as determined by a searching window. The various techniques that may be used in selecting an appropriate searching window or a set of candidate motion vectors will be understood by those ordinarily skilled in the art. A motion vector $v$ may be initialized to zero in step 252, to try an initial case for motion compensation with a zero motion vector. The set of candidate motion vectors will then each be tried to evaluate which produces the minimal cost for encoding. It will be appreciated that in this example embodiment, because it is based on MPEG-2 encoding, there is one motion vector per macroblock. It will also be appreciated that some encoding standards, such as H.263, H.264, and MPEG-4, may provide for up to 4 motion vectors per macroblock, *e.g.* one per sub-block.

At step 254, the prediction direction $d$ is evaluated to determine whether this calculation relates to forward or backward motion compensation. If forward, then in step 256 the residual of macroblock $MB_i$ is found using forward prediction and motion vector v. If backward, then in step 25 the residual of macroblock $MB_i$ is found using backward prediction and motion vector v. Then, in steps 260, 262, 264, and 266, the minimum cost of encoding each sub-block $b$ of the residual of macroblock $MB_i$ is determined. At step 268, the minimum costs are summed to arrive at a total minimum cost for encoding the residual of macroblock $MB_i$.

In steps 270 and 272, the next motion vector $v$ is selected and the process returns to step 254 until all candidate motion vectors have been tried.

In step 274, after the encoding costs for all candidate motion vectors have been calculated, the results are analyzed and the minimum cost for encoding the macroblock $MB_i$ using inter-mode coding from amongst all the candidate motion vectors is selected and recorded.

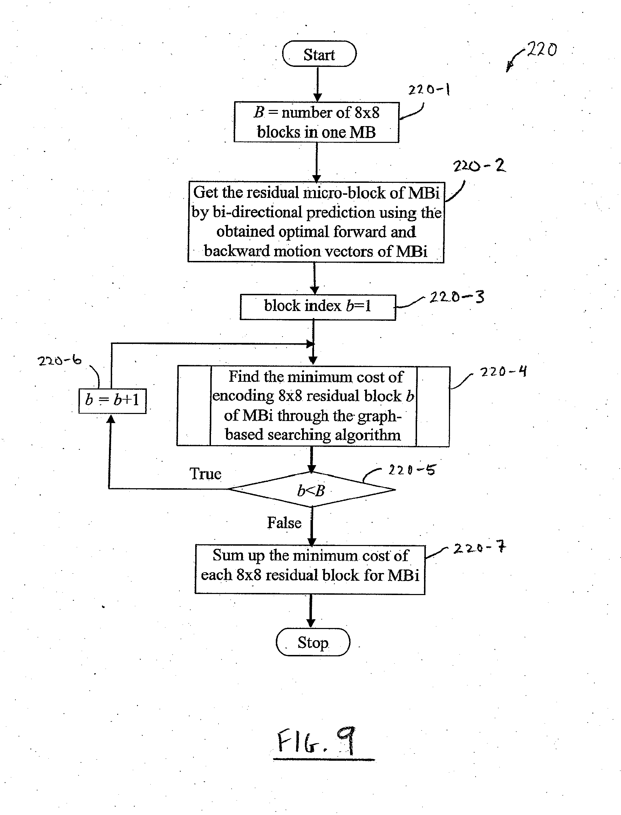

Reference is now made to Figure 9, which shows an example method of implementing step 220 from the method 200 of Figure 6. Step 220 involves finding the minimum cost of encoding macroblock $MB_i$ using inter-mode coding with bi-directional prediction. Step 220-1 reflects initialization of the number of sub-blocks $B$ for the macroblock $MB_i$. The residual of macroblock $MB_i$ is then found in step 220-2 using the optimal forward and backward motion vectors for macroblock $MB_i$ as determined in steps 212 and 218 of Figure 6 (in one case using the example method of Figure 8). Once the residual has been found, then the block index is initialized to 1 in step 220-3.

As with the previous methods, the minimal cost of encoding each 8x8 sub-block of the macroblock $MB_i$ is found, as indicated in steps 220-4, 220-5, and 220-6. The minimum costs of encoding each sub-block of the macroblock $MB_i$ are then summed to arrive at the overall minimum cost of encoding macroblock $MB_i$ using inter-mode coding with bi-directional motion compensation.

In each of the methods described above in Figures 7, 8, and 9, the minimal cost of encoding the macroblock $MB_i$ was determined by calculating the minimal cost of encoding each of the 8x8 sub-blocks within the macroblock $MB_i$ and then summing the results. More particularly, in the case of intra-mode coding, the calculation was based on encoding the sub-blocks of the macroblock $MB_i$. In the case of inter-mode coding (with forward, backward, or bi-directional motion compensation), the calculation was based on encoding the sub-blocks of the residual of the macroblock $MB_i$. In all cases, the methods involved calculating a minimum cost of encoding an 8x8 sub-block.

Figure 10 illustrates, in flowchart form, one embodiment of a method 300 of determining the minimum cost of encoding an 8x8 sub-block of a macroblock $MB_i$. The method 300 employs a graph-based searching algorithm for identifying a minimum encoding cost.

The inventors of the present application previously developed a graph-based searching algorithm for determining optimal coefficient indices for encoding an 8x8 block of a JPEG image in a joint optimization process, as described in patent application serial no. 11/180,513, filed July 15, 2005, the subject-matter of which is hereby incorporated by reference. A similar graph-based searching algorithm may be employed to determine the minimal cost of encoding each 8x8 block of a macroblock and, thereby, find the optimal transform domain coefficients $\boldsymbol{u}_i^*$.

The process of finding the optimal quantized transform domain coefficients $\boldsymbol{u}_i^*$ for an intra-coded MB and an inter-coded MB is similar except that different Huffman tables are used and some minor difference in quantization rounding and DC differential coding exist. Accordingly, only the algorithm for an inter-coded MB is described below. Furthermore, the optimal quantized transform domain coefficients $\boldsymbol{u}_i^*$ for one MB can be found sequentially for each 8x8 block. Accordingly, for brevity, the present application describes an example method for fmding the optimal quantized transform domain coefficients $\boldsymbol{u}_i^*$ for one 8x8 inter-coded block. Those ordinarily skilled in the art will appreciate the modifications for applying similar principles to intra-mode coding, etc.

Reference is now also made to Figure 11, which graphically illustrates an optimal path searching algorithm for finding the optimal quantized coefficients in the R-D sense (*i.e.*, performing the soft decision quantization in the R-D sense). In particular, Figure 11 shows a graph 400 with 66 nodes or states 402-*j* (shown individually as 402-0, 402-1, 402-2... 402-65). The 64 states in the middle, numbered as $j = 1, 2, \cdots, 64$, corresponding to the 64 transform domain coefficients of an 8x8 block in zigzag order. The first and the last states are special states called the *initial* state 402-0 and the *end* state 402-65, respectively. Each state 402-*j* ($1 \leq j \leq 64$) may have incoming connections from its previous states $k$ ($0 \leq k < j$), which correspond to the run, $R$, in an *(Run, Level)* pair. The *end* state 402-65 may have incoming connections from all the other states except the *initial* state 402-0. A connection from one of the states 402-*j* to the *end* state 402-65 corresponds to the EOB (end-of-block) code in MPEG-2 standard. For a given state $j$ ($1 \leq j \leq 64$) and its predecessor *j-r-l*, there are *l* parallel transitions between them which correspond to $l$ ($1 \leq l \leq l_{hard}$) different values that the quantized coefficient may take, where $l_{hard}$ is the output of a hard-decision quantizer for the $j^{th}$ coefficient. Even though a quantized transform domain coefficient can take a value from -2047 to 2047 in MPEG-2, a level value higher than $l_{hard}$ will always result in a higher rate distortion cost than that resulted from $l_{hard}$ for the same RUN due to the monotonicity of the Huffman codeword length for different levels in MPEG-2 syntax. For simplicity, one transition is shown in the graph 400 shown in Figure 11; the complete graph 400 would show the expansion of *l*.

Each transition $(r, l)$ from state *j-r-l* to state *j* is assigned a cost which is defined as the incremental Lagrangian cost of going from state *j-r-l* to state *j* when the $j^{th}$ DCT coefficient is quantized to *l* and all the *r* DCT coefficients appearing immediately before the $j^{th}$ DCT coefficient are quantized to zero. Specifically, this incremental cost is equal to

$$\sum_{k=j-r}^{j-1} C_k^2 + \left| C_j - Q^{-1}(l) \right|^2 + \lambda \cdot f(r,l) \qquad\qquad (3)$$

where $C_j$ is the $j^{th}$ DCT coefficient and $Q^{-1}(\cdot)$ stands for the de-quantization operation; and $f(r,l)$ is a length function that maps from the transition $(r, l)$ to a bit length (in MPEG-2, it is a table-lookup operation). For each transition from state $j$ to the *end* state, its cost is defined as

$$\sum_{k=j+1}^{64} C_k^2 + \lambda \cdot f(EOB) \qquad\qquad (4)$$

With the above definitions, every sequence of $(r,l)$ pairs ($l \le l_{hard}$) of an 8x8 block corresponds to a path from the *initial* state 402-0 to the *end* state 402-65 with a Lagrangian cost. Then, one can apply a fast dynamic programming algorithm to the directed graph to find the optimal sequence $(r,l)$ for a given 8x8 block. Detailed description of an example embodiment of such a fast dynamic programming algorithm and the corresponding pseudo-code is contained in patent application serial no. 11/180,513, filed July 15, 2005, the subject-matter of which is hereby incorporated by reference.

Reference is again made to the method 300 of Figure 10. The method 300 illustrates one example embodiment of the graph-based searching algorithm. It begins with setting a state index k to 1. The state index k indicates the coefficient (and, thus, node 402 (Fig. 10)) under consideration. In step 304, the curr_mini_cost parameter is a current minimum cost value that is initially set to a large number. In step 306, the value $l_{hard}$ is initialized to the absolute value of a hard-decision quantizer output for coefficient *k*. This value is considered in step 308 and, if the $l_{hard}$ value is zero, then it is set to 1 in step 310. The run index *r* is initialized to zero in step 312.

Step 314 marks the beginning of a loop to find the optimal sequence of $(r,l)$ pairs. The length parameter *l* is set to $l_{hard}$ in step 314. In step 316, the cost to state *k* of transitioning from state *k-r-l* is determined and saved to the parameter $\psi$. In steps 318 and 320, the curr_mini_cost parameter is set equal to $\psi$ if $\psi$ is less than curr_mini_cost.

Steps 316, 318, 320 are repeated for all lengths *l* from $l_{hard}$ down to *l*=1, as reflected in steps 322, 324. Once all the levels *l* for a given run *r* have been evaluated, then the process is repeated for the next increment of run *r* until the run *r* is equal to the state *k* less one, which would indicate a run from the *initial* state 402-0 (Fig. 11) to state *k.* This loop is reflected in steps 326 and 328.

In some embodiments, the repetition of steps 316, 318, 320 reflected in steps 322, 324 may be done for all lengths *l* from $l_{hard}$ to *l*=1; however, in some embodiments to reduce complexity, the repetition may be from $l_{hard}$ to $l_{hard}$ -s, where *s* is a small number such as 2 or 3. This simplification still produces a near optimal solution.

In step 330, after each run-level $(r, l)$ pair is evaluated, then the curr_mini_cost is added to the cost of a corresponding EOB, to get to the *end* state 402-65 (Fig. 11) from state *k*. The process is then repeated for the next state *k*, as shown in steps 332 and 334, until all 64 states/coefficients have been considered. Through comparison of the accumulated costs, the optimal cost is identified, as shown in step 336.

A second approximation for implementing the full R-D optimization is also possible. It will be noted that the large number of states in the trellis 50 of Figure 3 results from there being a state for each possible combination of quantization scaling factor candidates and motion vector candidates. The second approximation of the full R-D optimization process is to select a subset of motion vectors and a subset of quantization scaling factors and search a reduced product space spanned by these two subsets. As discussed in G. M. Schuster and A. K. Katsaggelos, "A theory for the optimal bit allocation between displacement vector field and displace frame difference," IEEE J. Select. Areas Commun., Vol. 15, pp. 1739-1751, Dec.1997, zero MV is at or is close to the R-D optimal MV. An MSE or MAE-optimal MV is also close to the R-D optimal MV in many cases. We may choose the 3x3 window around the zero MV and MSE or MAE-optimal MV as the subset of motion vectors for trellis searching. For quantization scaling factor, we may choose a subset of 3 scaling factors around the one determined by the $\rho$-domain rate control scheme or by the empirical equation between $\lambda$ and *q* proposed in T. Wiegand and B. Grirod, "Lagrangian multiplier selection in hybrid video coder control," in Proc. of ICIP'2001, pp. 542-545, Oct. 2001, with a given $\lambda$. With the selected subsets of MV and quantization scaling factor, only (9+9)x3+3=57 states are required in the trellis, which is quite reasonable for a practical application.

### *VARIATIONS - FAST OPTIMIZATION EMBODIMENTS*

In many applications, the first approximation of the full R-D optimization may still be too computationally expensive. Accordingly, in some embodiments, the first approximation of the full joint optimization may further be simplified to reduce the computational complexity by neglecting one or more relationships between the coding decisions. It will be appreciated that the rate-distortion performance degrades to some degree as the complexity is reduced by neglecting these relationships.

*A. Variant One*

One of the key computational burdens of the first approximation of the full R-D optimization process described above is to find the quantization scaling factor $q_i$ for each MB.

Since there are 31 candidates for each $q_i$, the same analysis is repeated 31 times for each MB with a different $q_i$. Variant One excludes the quantization scaling factor $q_i$ from the joint optimization loop. Variant One relies on a so-called $\rho$-domain rate control scheme to calculate $q_i$ for the entire frame. The Variant One optimization process remains the same as the first approximation of the full R-D optimization algorithm discussed in last section.

The $\rho$-domain rate control scheme is a method of selecting a quantization scaling factor, and it is described in Z. He, Y. K, Kim, and S. K. Mitra, "Low-delay rate control for DCT video coding via $\rho$-domain source modeling," IEEE Transactions on Circuit and Systems for Video Technology, vol. 11, No. 8, pp. 928-940, Aug. 2001, and in Z. He and S. K. Mitra, "A unified rate-distortion analysis framework for transform coding," IEEE Transactions on Circuit and Systems for Video Technology, vol. 11, No. 12, pp. 1221-1236, Dec., 2001, both of which are hereby incorporated by reference. In one example embodiment, the original $\rho$-domain rate control scheme is modified by not only estimating the $\rho$-domain rate control parameters for I, P and B frames separately, but estimating several sets of control parameters for P and B frames based on the initial estimated percentage of intra-coded MB in a frame so as to estimate the quantization scaling factor more accurately at scene cut or scene change.

*B. Variant Two*

The complexity remaining Variant One primarily comes from the motion vector estimation. Since the actual distortion and bit rate is used to select the optimal motion vector, the graph-based coefficient optimization process in the full joint optimization process has to be repeated for each motion vector candidate. To reduce this part of computational complexity, either on its own or together with Variant One, an iterative process may be used to find the motion vector $v_i$ for the $i^{th}$ MB. In one example embodiment, the iterative process may be implemented as follows:

1. Initial $v_i$ by optimizing the motion compensation based on the prediction error only, *i.e.,*

$$v_i = \arg \min_{v_i} \{J(\lambda) = \|X_i - P(v_i)\| + \lambda \cdot r(v_i)$$ where $P$ stands for the prediction operation.

2. For a given motion vector $v_i$, find the quantized transform domain coefficients $u_i$ by solving

$$u_i = \arg \min_{u_i} \{J(\lambda) = \left| X_i - P(v_i) - T^{-1}(Q^{-1}(u_i)) \right|^2 + \lambda \cdot r(u_i) \qquad (5)$$

where $T^{-1}(\cdot)$ represents the inverse DCT transform. This optimization process is achieved by utilizing the graph-based coefficient optimization process discussed above.

3. Update the motion vector $v_i$ by solving

$$v_i = \arg \min_{v_i} \{J(\lambda) = \left\| X_i - T^{-1}(Q^{-1}(u_i)) - P(v_i) \right\| + \lambda \cdot r(v_i) \qquad (6)$$

4. Repeat step 2 and 3 until the decrease of $J(\lambda)$ is below a given convergence threshold.

The iterative process usually takes two to four iterations to converge.

Other variations and modifications to obtain a motion vector more quickly than searching a full window will be appreciated by those ordinarily skilled in the art and it will be appreciated that the first approximation of the full joint optimization process may be modified to incorporate any such motion vector selection process.

*C. Variant Three*

The graph-based coefficients optimization process will still be repeated two to four times in Variant Two. To reduce this repeated operation further, Variant Three estimates the motion vector for each MB using the prediction error only as it is used in TM5 of MPEG-2 [27]. In other words, Variant Three only optimizes the coding mode and the quantized transform domain coefficients on top of $\rho$-domain rate control scheme. The R-D coding performance as well as the complexity in execution time of these fast algorithms will be compared against the full joint optimization algorithm and TM5 of MPEG-2 in next section.

**EXPERIMENTAL RESULTS**

The first approximation of the full joint optimization process and its three fast variations proposed in this application were evaluated against MEPG-2 TM5 using two standard QCIF (176x144 pixels) video clips, *Foreman* and *Coastguard.* In the experiments, each GOP contains 15 frames and I/P frame distance is 3 for all cases. In other words, a coding pattern IBBPBBPBBPBBPBB was adopted. Frame rate is fixed at 25 frames/s and the original video sequences were sub-sampled temporally by skipping every two out of three frames. All the three fast variants use the bit rate control scheme of TM5 to calculate a target bit rate for each frame and the $\rho$-domain rate control method determines the quantization scaling factor for each frame. The Lagrangian multiplier, $\lambda$, for the three fast variants is chosen depending on the quantization scaling factor according to the relationship determined experimentally. In the experiments, it was chosen that $\lambda = 0.2q^2$ for P frames where q is the quantizater scale factor. If $\lambda$ were also chosen as $0.2q^2$ for I and B frames, the resulted bit allocation among I, P, and B frame would differ from that resulted from TM5 in which an I frame consumes more and a B frame consumes less. To make a fair comparison with MPEG-2 TM5 such that the resulting bit rates for I, P and B frames are similar to the bit rates of these frame types resulted in TM5, a slightly larger $\lambda$ is chosen for I frame and slightly smaller $\lambda$ for B frame for these three fast variants. For the approximation of the full joint optimization algorithm, $\lambda$ is the only parameter that controls the bit rate. A small $\lambda$ will generate a high bit rate and a large $\lambda$ will result in a low bit rate.

To generate the R-D curves for different bit rates and adapt to a target bit quota, a simple method was used to change the value of $\lambda$ adaptively for the first approximation of the full joint optimization algorithm. Specifically, TM5 is still used to calculate a target bit rate for each frame. At the end of encoding each frame, $\lambda$ is adaptively updated based on the ratio of the difference between the actual bit rate and target bit rate over the target bit rate. Furthermore, $\lambda$ is updated for different frame type separately.

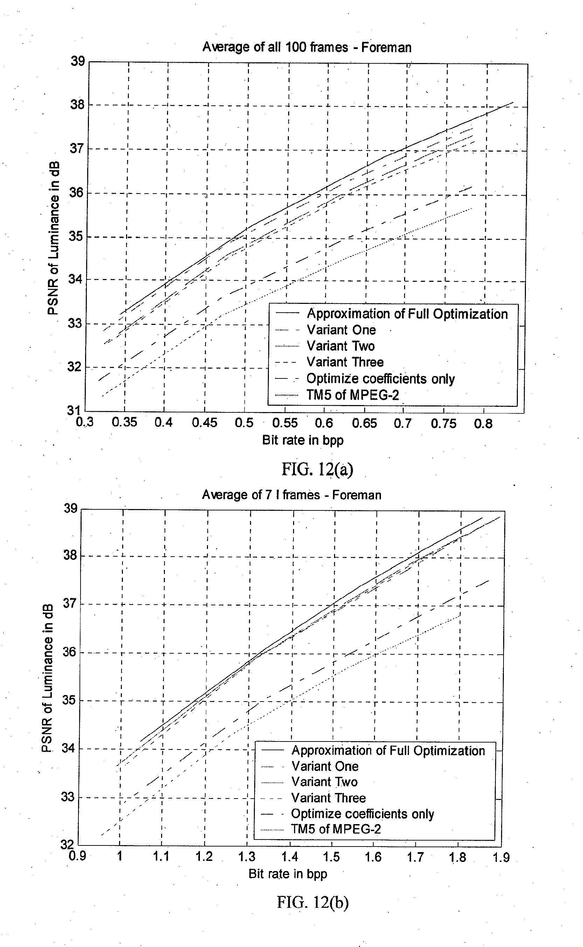

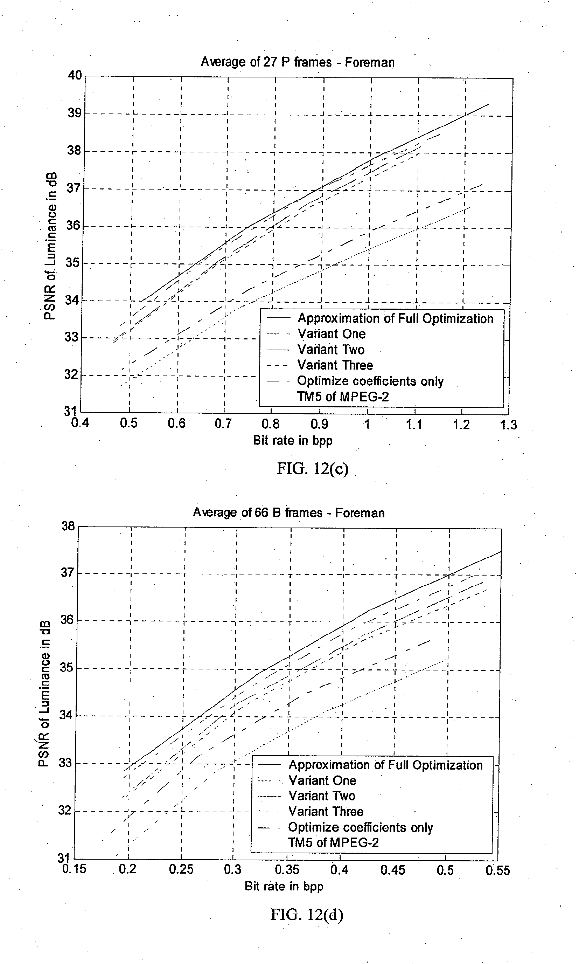

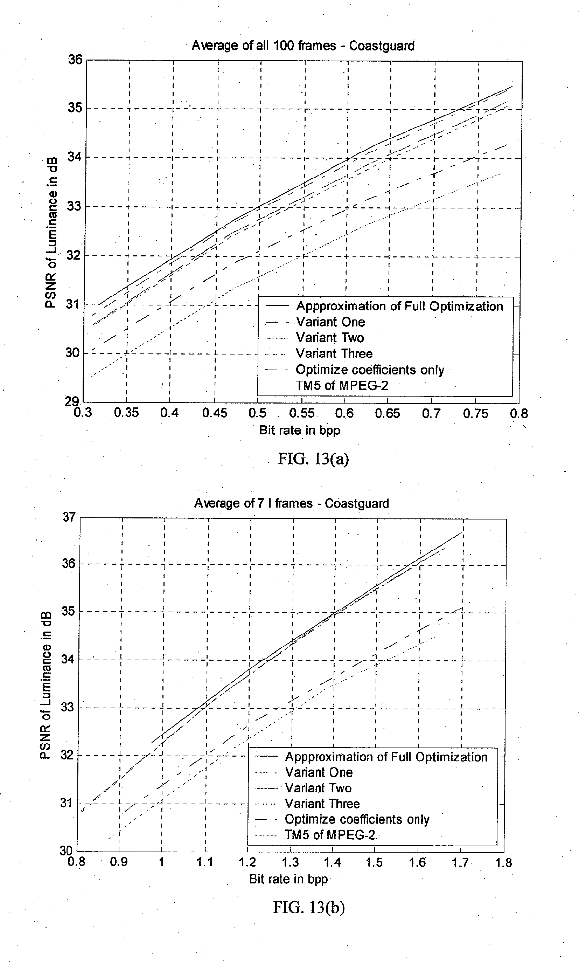

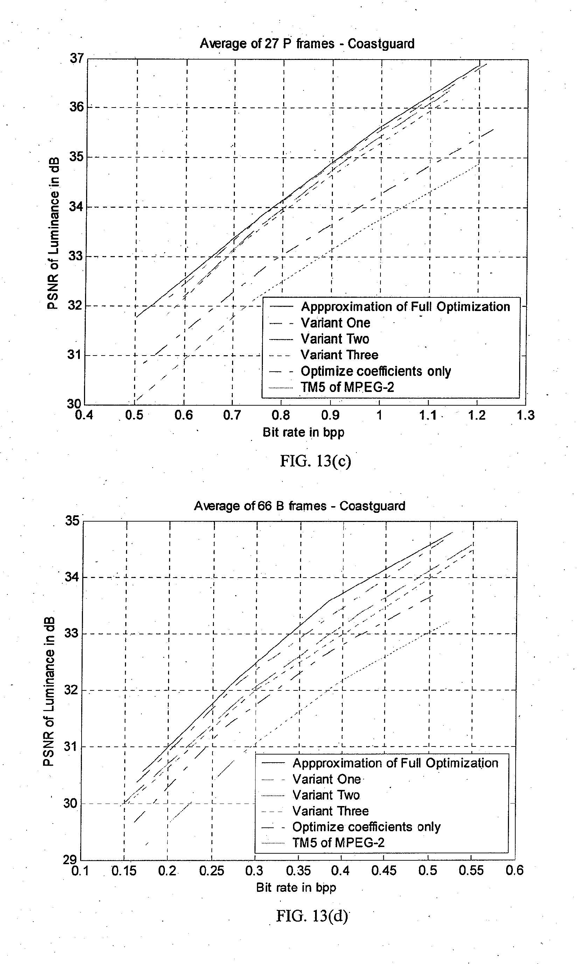

Figures 12 (a) to (d) and 13 (a) to (d), respectively, plot the PSNR values of the luminance component versus the bit rate for the first 100 frames of video sequences *Foreman* and *Coastguard,* where the R-D curves are plotted both for different frame type and the total average of all frames. The first approximation of the full joint optimization process results in significant improved R-D performance and the average PSNR gain is more than 2 dB for the bit rates under comparison (200 kbps to 500 kbps). This implementation of the first approximation of the full joint optimization process did not search every quantization scaling factor candidate. In stead, it jumps by 2 or 3 among certain candidate range based on the target bit rate. Slightly better PSNR values can be obtained if all the candidates for the quantization scaling factor are searched and compared as described above.

It was observed that both the first approximation of the full joint optimization process and its three fast variants achieve more R-D performance gain on P and B frame than I frame since there are more free parameters to be jointly optimized in P and B frame. Second, as more and more interaction between the coding decisions are neglected in the three fast variants in order to reduce the complexity, the R-D gain for P and B frames decreases gradually. On the other hand, these three fast variants achieve almost the same R-D performance for I frame while the first approximation of the full joint optimization process results in a marginally better performance than the fast variants. Third, Variant One almost achieves the near-optimal R-D performance that the first approximation of the full joint optimization process is able to obtain while the complexity is reduced dramatically. Fourth, Variant Three still achieves significant R-D performance improvement while its complexity is quite close to TM5. The coding gain obtained by optimizing the transform domain coefficient alone was also given in the plots for comparison purpose. It can be seen that around 0.5dB gain in average was achieved by the run-length optimization alone, which is quite significant.

A comparison can be made between the complexity of the first approximation of the full joint optimization process and the complexity of the fast variants based on the execution time. Table I tabulates the CPU time in second for the C code implementation of the proposed approximation of the full joint optimization process and the fast variants running on a Pentium PC. The time is the average to optimize one frame from encoding 100 frames of sequence *Foreman.* It can be seen that Variant Three only increases the encoding time slightly but the average coding gain is 1.3-1.6 dB over MPEG-2 TM5. It is also worth pointing out that all the optimization embodiments discussed herein adopt the full search method in motion estimation. It will be appreciated that any efficient fast motion estimation algorithms may be applied in these optimization embodiments to increase speed with a marginal compression performance degradation.

TABLE I: Average CPU time in second of the proposed optimization algorithms on optimizing one frame of Foreman sequence.

TABLE I - Performance Comparison for Embodiments

| Embodiment | Approximation of the full opt. | Variant 1 | Variant 2 | Variant 3 | TM5 |
|---|---|---|---|---|---|
| Time Consumed(s) | 67 | 6.693 | 0.227 | 0.061 | 0.022 |

Each 16x16 contains 4 8x8 luminance blocks and up to 8 8x8 chrominance blocks. The joint optimization in this application is conducted on luminance blocks (i.e., the calculated rate-distortion cost of an MB only include the luminance blocks) even though it is straightforward to include all luminance and chrominance subblocks (luminance blocks plays the dominant role in determining the optimal coding parameters).

Certain adaptations and modifications of the described embodiments can be made. Therefore, the above discussed embodiments are considered to be illustrative and not restrictive.

**Claims**

1. A method for optimal video coding for encoding a slice of a video source, wherein the slice includes a series of macroblocks and each macroblock comprises a plurality of sub-blocks, the method comprising:

   calculating (154, 206, 212, 218, 220), for each macroblock within the slice, a minimum actual rate-distortion cost for each combination of coding mode, quantizer scaling factor, and motion vector, wherein calculating the minimum actual rate-distortion cost comprises finding (206-3, 300) the optimal quantized transform domain coefficients for each sub-block within the macroblock;
   determining (156, 222), for each macroblock and for each of the combinations of coding mode, quantizer scaling factor and motion vector, a minimum cumulative rate-distortion cost from an initial stage;
   tracing back (158, 232) through the minimum cumulative rate-distortion costs for each of the macroblocks in the series of macroblocks in the slice to identify the coding mode, quantizer scaling factor and motion vector for each macroblock that result in a minimum total rate-distortion cost for the slice, and recording the parameters for each macroblock including, for each macroblock, the identified coding mode, the identified motion vector, and the identified quantizer scaling factor;
   finding (160) the optimal quantized transform domain coefficients for each macroblock based on the minimum rate-distortion cost for the slice; and encoding (162) the slice using the identified coding modes, identified motion vectors, identified quantizer scaling factors and optimal quantized transform domain coefficients.

2. The method claimed in claim 1, wherein the slice is a frame, the frame has a frame type and wherein calculating comprises, for each quantizer scaling factor, finding (200) the cost of encoding each macroblock for each coding mode possible within the frame type.

3. The method claimed in claim 2, wherein the frame type comprises one of I-frame, P-frame, and B-frame.

4. The method claimed in claim 1, wherein calculating comprises calculating a minimum actual rate-distortion cost for each combination of coding mode, quantizer scaling factor, and motion vector, excluding differential costs, and wherein determining the minimum cumulative rate-distortion cost from the initial stage includes the differential costs.

5. The method claimed in claim 1 or claim 4, wherein the coding mode comprises inter-mode coding, and wherein the step of calculating comprises generating a residual macroblock for each macroblock within the slice, and calculating, for each residual macroblock, a minimum actual rate-distortion cost for each combination of the coding mode, the quantizer scaling factor, and the motion vector, and wherein calculating the minimum actual rate-distortion cost comprises finding the optimal quantized transform domain coefficients for each sub-block within the residual macroblock.

6. The method claimed in any of claims 1, 4 or 5 wherein each combination comprises a node within a trellis of costs (50) and wherein the minimum cumulative rate-distortion cost at each node comprises a least-cost path from the initial stage to a current node.

7. The method claimed in claim 6, wherein for each macroblock the nodes of the trellis comprise distinct quantization scaling factors.

8. The method claimed in claim 6, wherein for each macroblock the nodes of the trellis comprises distinct combinations of quantization scaling factors and motion vectors.

9. The method claimed in claim 6, wherein the tracing back includes traversing the trellis from an end node to the initial stage along said least-cost path, and wherein recording comprises recording the parameters associated with the nodes along said least-cost path.

10. The method claimed in any of claims 1, 4, 5, 6 or 9 further comprising preselecting a set quantizer scaling factor using a $\rho$-domain rate control, and wherein calculating the minimum actual rate-distortion cost uses the set quantizer scaling factor.

11. The method claimed in any of claims 1, 4, 5, 6, 7, 9 or 10 wherein calculating further includes selecting the identified motion vector based on prediction error approximation.

12. The method claimed in any of claims 1 to 11 wherein finding the optimal quantized transform domain coefficients for each sub-block within the macroblock comprises applying a graph-based searching algorithm (400) for minimizing costs associated with run-length encoding pairs for possible coefficients.

13. An encoder (10) for encoding a slice of a video source (12), wherein the slice includes a series of macroblocks and each macroblock comprises one or more sub-blocks, the encoder comprising:

an input port for receiving the video source (12); an output port for outputting the encoded bitstream (14); a coding mode selector (16) for determining the coding mode applied to each macroblock; a transform processor (18) for performing a transform operation on each macroblock to create transform domain coefficients; a quantizer (20) for quantizing the transform domain coefficients to generate quantized transform domain coefficients based on a quantizer scaling factor; a motion compensation feedback loop (24, 26, 28, 30) for selecting a motion vector and generating a residual macroblock based on a reference frame; an entropy encoder (22) for generating the encoded bitstream from the quantized transform domain coefficients; memory for storing data; and an optimizer (32),
wherein the optimizer (32) is configured to perform the method claimed in any one of claims 1 to 12.

14. A computer program product comprising a computer-readable medium containing computer-executable instructions for encoding a slice of a video source, wherein the slice includes a series of macroblocks and each macroblock comprises one or more subblocks, the computer-executable instructions comprising instructions for configuring a processor to perform the method claimed in any one of claims 1 to 12.

**Amended claims in accordance with Rule 137(2) EPC.**

1. A method for video coding for encoding a slice of a video source, wherein the slice includes a series of macroblocks and each macroblock comprises a plurality of sub-blocks, the method comprising:

calculating (154, 206, 212, 218, 220), for each macroblock within the slice, a minimum actual rate-distortion cost for each combination of coding mode, quantizer scaling factor, and motion vector, wherein calculating the minimum actual rate-distortion cost comprises finding (206-3, 300) the optimal quantized transform domain coefficients for each sub-block within the macroblock that achieve the minimum actual rate-distortion cost, and wherein the minimum actual rate-distortion cost is calculated without including differential factors dependent upon a previous macroblock;
determining (156, 222), for each macroblock and for each of the combinations of coding mode, quantizer scaling factor and motion vector, a minimum cumulative rate-distortion cost from an initial stage;
tracing back (158, 232) through the minimum cumulative rate-distortion costs for each of the macroblocks in the series of macroblocks in the slice to identify the coding mode, quantizer scaling factor and motion vector for each macroblock that result in a minimum total rate-distortion cost for the slice, and recording the parameters for each macroblock including, for each macroblock, the identified coding mode, the identified motion vector, and the identified quantizer scaling factor;
finding (160) the optimal quantized transform domain coefficients for each macroblock corresponding to the recorded parameters; and
encoding (162) the slice using the identified coding modes, identified motion vectors, identified quantizer scaling factors and optimal quantized transform domain coefficients.

**2.** The method claimed in claim 1, wherein the slice is a frame, the frame has a frame type and wherein calculating comprises, for each quantizer scaling factor, finding (200) the cost of encoding each macroblock for each coding mode possible within the frame type.

**3.** The method claimed in claim 2, wherein the frame type comprises one of I-frame, P-frame, and B-frame.

**4.** The method claimed in claim 1, wherein calculating comprises calculating a minimum actual rate-distortion cost for each combination of coding mode, quantizer scaling factor, and motion vector, excluding differential costs, and wherein determining the minimum cumulative rate-distortion cost from the initial stage includes the differential costs.

**5.** The method claimed in claim 1, wherein the coding mode comprises inter-mode coding, and wherein the step of calculating comprises
generating a residual macroblock for each macroblock within the slice, and
calculating, for each residual macroblock, a minimum actual rate-distortion cost for each combination of the coding mode, the quantizer scaling factor, and the motion vector, and wherein calculating the minimum actual rate-distortion cost comprises finding the optimal quantized transform domain coefficients for each sub-block within the residual macroblock.

**6.** The method claimed in claim 1, wherein each combination comprises a node within a trellis of costs (50) and wherein the minimum cumulative rate-distortion cost at each node comprises a least-cost path from the initial stage to a current node.

**7.** The method claimed in claim 6, wherein for each macroblock the nodes of the trellis comprise distinct quantization scaling factors.

**8.** The method claimed in claim 6, wherein for each macroblock the nodes of the trellis comprises distinct combinations of quantization scaling factors and motion vectors.

**9.** The method claimed in claim 6, wherein the tracing back includes traversing the trellis from an end node to the initial stage along said least-cost path, and wherein recording comprises recording the parameters associated with the nodes along said least-cost path.

**10.** The method claimed in claim 1, further comprising preselecting a set quantizer scaling factor using a $\rho$-domain rate control, and wherein calculating the minimum actual rate-distortion cost uses the set quantizer scaling factor.

**11.** The method claimed in claim 1, wherein finding the optimal quantized transform domain coefficients for each sub-block within the macroblock comprises applying a graph-based searching algorithm (400) for minimizing costs associated with run-length encoding pairs for possible coefficients.

**12.** An encoder (10) for encoding a slice of a video source (12), wherein the slice includes a series of macroblocks and each macroblock comprises one or more sub-blocks, the encoder comprising:

an input port for receiving the video source (12); an output port for outputting the encoded bitstream (14); a coding mode selector (16) for determining the coding mode applied to each macroblock; a transform processor (18) for performing a transform operation on each macroblock to create transform domain coefficients; a quantizer (20) for quantizing the transform domain coefficients to generate quantized transform domain coefficients based on a quantizer scaling factor; a motion compensation feedback loop (24, 26, 28, 30) for selecting a motion vector and generating a residual macroblock based on a reference frame; an entropy encoder (22) for generating the encoded bitstream from the quantized transform domain coefficients; memory for storing data; and an optimizer (32),

wherein the optimizer (32) is configured to perform the method claimed in any one of claims 1 to 11.

**13.** A computer program product comprising a computer-readable medium containing computer-executable instructions for encoding a slice of a video source, wherein the slice includes a series of macroblocks and each macroblock comprises one or more sub-blocks, the computer-executable instructions comprising instructions for configuring a processor to perform the method claimed in any one of claims 1 to 11.

FIG.1

FIG.2

FIG. 3

FIG.4

FIG.11

150 →

RECEIVING VIDEO SOURCE — 152

CALCULATING ACTUAL MINIMUM
R-D COST FOR ALL POTENTIAL COMBINATIONS
OF $m_i$ $v_i$ AND $q_i$ FOR EACH $MB_i$ — 154

FIND MINIMUM TOTAL R-D COST FOR
EACH $MB_i$ FROM ALL POSSIBLE STATES
OF PREVIOUS MB. — 156

FIND MINIMUM TOTAL R-D COST
FOR FRAME AND IDENTIFY
$M_k^*$, $V_k^*$, AND $Q_k^*$ FOR
EACH $MB_i$ — 158

OBTAIN $U_k^*$ — 160

ENCODE FRAME — 162

FIG. 5

200

Start

stage index $i = 1$ — 202

state index $j = 1$ — 204

206

Find the minimum cost of
encoding MBi in intra-mode

208
P/B frame — False

True

prediction direction $d$ = forward — 210

212

Find the minimum cost of
encoding MBi in inter-mode

214
B frame — False

True

prediction direction $d$ = backward — 216

218

Find the minimum cost of
encoding MBi in inter-mode

220

Find the minimum cost of
encoding MBi in bi-directional
prediction inter-mode

226
$j = j + 1$

230
$i = i + 1$

Find the minimum cost to state $j$ of stage $i$
from each state of stage $i$-1 by comparison
and record the parameters accordingly — 222

True
$j < 31$ — 224

False

228
$i <$ number of MBs — True

False

Find the minimum cost of whole slice and optimal
parameters, $M_K^*, V_K^*$, and $Q_K^*$, by backtracking — 232

Stop

FIG. 6

206

Start

$B$ = number of 8x8 blocks in one MB — 206-1

block index $b = 1$ — 206-2

206-3

Find the minimum cost of encoding 8x8 block $b$ of MBi in intra mode through graph-based searching algorithm

$b = b+1$ — 206-5

206-4 $b<B$ — True

False

Sum up the minimum costs of all 8x8 blocks of MBi — 206-6

Stop

FIG. 7

Start

$B$ = number of 8x8 blocks in one MB — 250

212

218

motion vector $v = 0$ — 252

forward     $d$     backward — 254

256
Get the residual micro-block of MBi by forward prediction using motion vector $v$

258
Get the residual micro-block of MBi by backward prediction using motion vector $v$

block index $b=1$ — 260

266
$b = b+1$

262
Find the minimum cost of encoding 8x8 residual block $b$ of MBi through the graph-based searching algorithm

264
True     $b<B$

272
$v$ = next motion vector in searching window

False

268
Sum up the minimum cost of each 8x8 residual block for MBi

270
Tried each candidate $v$     False

True

274
Find and record the minimum cost of encoding MBi and corresponding optimal motion vector $v$ by comparison

Stop

FIG. 8

23

Start

*220*

$B$ = number of 8x8 blocks in one MB — *220-1*

Get the residual micro-block of MBi by bi-directional prediction using the obtained optimal forward and backward motion vectors of MBi — *220-2*

block index $b=1$ — *220-3*

*220-6*

$b = b+1$

Find the minimum cost of encoding 8x8 residual block $b$ of MBi through the graph-based searching algorithm — *220-4*

True

$b<B$ — *220-5*

False

Sum up the minimum cost of each 8x8 residual block for MBi — *220-7*

Stop

FIG. 9

300

Start

state index $k = 1$ — 302

304

curr_mini_cost = large number

306

$l_{hard}$ = absolute value of hard-decision quantizer output of coefficient $k$

308

$l_{hard} = 0$ — False

True

310

$l_{hard} = 1$

run index $r = 0$ — 312

$l = l_{hard}$ — 314

316

Calculate the new cost to state $k$ through state k-r-1 and save it to $\lambda$

318

$\lambda <$ curr_mini_cost — False

True

324

320

$l = l - 1$

curr_mini_cost = $\lambda$ recode $r, l, \lambda$ for state $k$

328

$r = r + 1$

334

$k = k + 1$

True

$l > 1$ — 322

False

True

$r < k-1$ — 326

False

330

Sum up curr_mini_cost and the corresponding EOB cost to get the minimum cost of going to end state through state $k$

332

$k < 64$ — True

False

336

Find the minimum cost of encoding 8x8 block $b$ by comparison

Stop

FIG. 10

Average of all 100 frames - Foreman

FIG. 12(a)

Average of 7 I frames - Foreman

FIG. 12(b)

FIG. 12(c)

FIG. 12(d)

Average of all 100 frames - Coastguard

FIG. 13(a)

Average of 7 I frames - Coastguard

FIG. 13(b)

**Average of 27 P frames - Coastguard**

FIG. 13(c)

**Average of 66 B frames - Coastguard**

FIG. 13(d)

52

```
                          ┌─────────┐
                          │  Start  │
                          └─────────┘
                               │
                          ┌──────────────────┐
                          │ stage index i =1 │
                          └──────────────────┘
                               │
                          ┌──────────────────┐
                          │ state index j =1 │
                          └──────────────────┘
                               │
         True          ◇ Is j a qₘ state ◇          False
      ┌────────────────┘                └────────────────┐
```

Is $j$ a $q_m$ state

Find the minimum cost of encoding MBi in intra-mode

Find the minimum cost of encoding MBi in inter-mode with motion vector $v$ determined by $j$

Find the minimum cost to state $j$ of stage $i$ by comparing the sum of the minimum cost to each state of stage $i$-1 and the incremental cost from each state of stage $i$-1 to state $j$ of stage $i$

$j=j+1$

$i = i +1$

Tried each state

False

True

$i$<number of MBs — True

False

Find the minimum cost of whole slice and optimal parameters, $M_K^*, V_K^*$, and $Q_K^*$, by backtracking

┌─────────┐
│  Stop   │
└─────────┘

FIG.14

54

Start

Get the residual micro-block of MBi by forward prediction using motion vector $v$

$B$ = number of 8x8 blocks in one MB

block index $b$=1

Find the minimum cost of encoding 8x8 residual block $b$ of MBi through the graph-based searching algorithm

$b = b+1$

True

$b<B$

False

Sum up the minimum cost of each 8x8 residual block for MBi

Stop

FIG.15

Europäisches
Patentamt

European
Patent Office

Office européen
des brevets

# EUROPEAN SEARCH REPORT

Application Number

EP 09 15 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EN-HUI YANG ET AL: "Rate Distortion Optimization for H.264 Interframe Coding: A General Framework and Algorithms" IEEE TRANSACTIONS ON IMAGE PROCESSING, IEEE SERVICE CENTER, PISCATAWAY, NJ, US, vol. 16, no. 7, 1 July 2007 (2007-07-01), pages 1774-1784, XP011185448 ISSN: 1057-7149 | 1-9, 11-14 | INV. H04N7/50 |
| Y | * abstract * * page 1774, right-hand column, last paragraph - page 1781, right-hand column, paragraph 1 * | 10 | |
| X | EN-HUI YANG ET AL: "Soft Decision Quantization for H.264 With Main Profile Compatibility" IEEE TRANSACTIONS ON CIRCUITS AND SYSTEMS FOR VIDEO TECHNOLOGY, IEEE SERVICE CENTER, PISCATAWAY, NJ, US, vol. 16, no. 1, 1 January 2009 (2009-01-01), pages 122-127, XP011239523 ISSN: 1051-8215 * the whole document * | 1-9, 11-14 | |
| D,Y | ZHIHAI HE ET AL: "Low-Delay Rate Control for DCT Video Coding via rho-Domain Source Modeling" IEEE TRANSACTIONS ON CIRCUITS AND SYSTEMS FOR VIDEO TECHNOLOGY, IEEE SERVICE CENTER, PISCATAWAY, NJ, US, vol. 11, no. 8, 1 August 2001 (2001-08-01), XP011014229 ISSN: 1051-8215 * abstract * | 10 | TECHNICAL FIELDS SEARCHED (IPC) H04N |

-----

-----

-----

-/--

The present search report has been drawn up for all claims

| Place of search | Date of completion of the search | Examiner |
|---|---|---|
| Berlin | 24 August 2009 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 09 15 5312

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIANGTAO WEN ET AL: "Trellis-Based R-D Optimal Quantization in H.263+" IEEE TRANSACTIONS ON IMAGE PROCESSING, IEEE SERVICE CENTER, PISCATAWAY, NJ, US, vol. 9, no. 8, 1 August 2000 (2000-08-01), XP011025644 ISSN: 1057-7149 * the whole document * | 1,12-14 | |
| D,A | US 2007/217506 A1 (YANG EN-HUI [CA] ET AL) 20 September 2007 (2007-09-20) * abstract * * paragraph [0043] - paragraph [0109] * | 1-14 | |
| A | EN-HUI YANG ET AL: "Joint Optimization of Run-Length Coding, Huffman Coding and Quantization Table with Complete Baseline JPEG Compatibility" IMAGE PROCESSING, 2007. ICIP 2007. IEEE INTERNATIONAL CONFERENCE ON, IEEE, PI, 1 September 2007 (2007-09-01), pages III-181, XP031158034 ISBN: 978-1-4244-1436-9 * abstract * sections 3.1, 3.2 | 1-14 | TECHNICAL FIELDS SEARCHED (IPC) |
| A | COENE W M J ET AL: "On performance gains in MPEG-2 video coding via a rate-distortion optimal route" SIGNAL PROCESSING, ELSEVIER SCIENCE PUBLISHERS B.V. AMSTERDAM, NL, vol. 55, no. 3, 1 December 1996 (1996-12-01), pages 369-374, XP004113781 ISSN: 0165-1684 * abstract * * page 369, right-hand column, line 3 - page 371, right-hand column, paragraph 1 * | 1-14 | |

-/--

The present search report has been drawn up for all claims

| Place of search | Date of completion of the search | Examiner |
|---|---|---|
| Berlin | 24 August 2009 | Kontopodis, D |

Europäisches
Patentamt

European
Patent Office

Office européen
des brevets

# EUROPEAN SEARCH REPORT

Application Number

EP 09 15 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YANG K H ET AL: "Real time implementation of rate-distortion optimized coding mode selection for H.263 video coders" IMAGE PROCESSING, 1998. ICIP 98. PROCEEDINGS. 1998 INTERNATIONAL CONFERENCE ON CHICAGO, IL, USA 4-7 OCT. 1998, LOS ALAMITOS, CA, USA,IEEE COMPUT. SOC, US, vol. 2, 4 October 1998 (1998-10-04), pages 387-390, XP010308532 ISBN: 978-0-8186-8821-8 * the whole document * | 1-14 | |
| A | YAN YANG ET AL: "Generalized Rate-Distortion Optimization for Motion-Compensated Video Coders" IEEE TRANSACTIONS ON CIRCUITS AND SYSTEMS FOR VIDEO TECHNOLOGY, IEEE SERVICE CENTER, PISCATAWAY, NJ, US, vol. 10, no. 6, 1 September 2000 (2000-09-01), XP011014106 ISSN: 1051-8215 * abstract * sections I, II, III, V | 1-14 | |
| A | MATTHEW CROUSE ET AL: "Joint Thresholding and Quantizer Selection for Transform Image Coding: Entropy-Constrained Analysis and Applications to Baseline JPEG" IEEE TRANSACTIONS ON IMAGE PROCESSING, IEEE SERVICE CENTER, PISCATAWAY, NJ, US, vol. 6, no. 2, 1 February 1997 (1997-02-01), XP011026108 ISSN: 1057-7149 * abstract * * page 288, left-hand column, paragraph 2 - page 292, right-hand column, line 7 * | 1-14 | TECHNICAL FIELDS SEARCHED (IPC) |

-/--

The present search report has been drawn up for all claims

| Place of search | Date of completion of the search | Examiner |
|---|---|---|
| Berlin | 24 August 2009 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 15 5312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WANG W ET AL: "Rate distortion optimized quantization for H.264/AVC based on dynamic programming" VISUAL COMMUNICATIONS AND IMAGE PROCESSING; 12-7-2005 - 15-7-2005; BEIJING,, 12 July 2005 (2005-07-12), XP030081056 * abstract * * page 2101, paragraph 2 - page 2104, paragraph 3 * | 1-14 | |
| A | MUKHERJEE D ET AL: "Combined mode selection and macroblock quantization step adaptation for the H.263 video encoder" IMAGE PROCESSING, 1997. PROCEEDINGS., INTERNATIONAL CONFERENCE ON SANTA BARBARA, CA, USA 26-29 OCT. 1997, LOS ALAMITOS, CA, USA,IEEE COMPUT. SOC, US, 26 October 1997 (1997-10-26), pages 37-40, XP010253842 ISBN: 978-0-8186-8183-7 * abstract * sections 2 and 3 | 1-14 | TECHNICAL FIELDS SEARCHED (IPC) |

The present search report has been drawn up for all claims

| Place of search | Date of completion of the search | Examiner |
|---|---|---|
| Berlin | 24 August 2009 | Kontopodis, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 15 5312

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2009

| Patent document cited in search report | Publication date | Patent family member(s) | Publication date |
|---|---|---|---|
| US 2007217506 A1 | 20-09-2007 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070217506 A

- US 11180513 B

**Non-patent literature cited in the description**

- **G. M. Schuster ; A. K. Katsaggelos.** A theory for the optimal bit allocation between displacement vector field and displace frame difference. *IEEE J. Select. Areas Commun.,* December 1997, vol. 15, 1739-1751
- **T. Wiegand ; B. Grirod.** Lagrangian multiplier selection in hybrid video coder control. *Proc. of ICIP'2001,* October 2001, 542-545

- **Z. He ; Y. K, Kim ; S. K. Mitra.** Low-delay rate control for DCT video coding via ρ-domain source modeling. *IEEE Transactions on Circuit and Systems for Video Technology,* August 2001, vol. 11 (8), 928-940
- **Z. He ; S. K. Mitra.** A unified rate-distortion analysis framework for transform coding. *IEEE Transactions on Circuit and Systems for Video Technology,* December 2001, vol. 11 (12), 1221-1236